# EUROPÄISCHE PATENTSCHRIFT

(11) **EP 2 984 417 B1**
(45) Veröffentlichungstag und Bekanntmachung des Hinweises auf die Patenterteilung: **30.05.2018**
(21) Anmeldenummer: 14722541.1
(22) Anmeldetag: 11.04.2014
(51) Int. Cl.: F24J 2/52, H01L 31/042

(54) **HALTERVORRICHTUNG ZUM BEFESTIGEN EINES FLÄCHENMODULS AN EINEM TRÄGER**
HOLDING APPARATUS FOR FIXING A SURFACE MODULE TO A SUPPORT
DISPOSITIF DE MAINTIEN POUR LA FIXATION D'UN MODULE DE SURFACE SUR UN SUPPORT

(30) Priorität: 12.04.2013 EP 13001913
(43) Veröffentlichungstag der Anmeldung: 17.02.2016
(73) Patentinhaber: RBI Solar, Inc., Cincinnati, OH 45217 (US)
(72) Erfinder: GIRAUDO, Francisco, 50968 Köln (DE); SCHULD, Heinz, 2620 Ramplach (AT)
(74) Vertreter: Graf von Stosch, Andreas
(86) Internationale Anmeldenummer: PCT/EP2014/000975
(87) Internationale Veröffentlichungsnummer: WO 2014/166638

(56) Entgegenhaltungen:
- EP-A1- 2 309 552
- EP-A1- 2 495 507
- EP-A2- 2 090 847
- DE-U1-202011 001 761
- DE-U1-202011 107 843

## Beschreibung

Die Erfindung betrifft eine Haltervorrichtung zum Befestigen eines Flächenmoduls an einem Träger gemäß dem Oberbegriff des Anspruchs 1.

Bei der Montage von Flächenmodulen, wie zum Beispiel Solarthermie-Paneelen oder Solarpaneelen, ist es wünschenswert, mit einfach aufgebauten Haltern oder Klemmen arbeiten zu können, denn solche Module müssen häufig auf Dachschrägen oder an schlecht zugänglichen Fassaden montiert werden. Gleichzeitig sollte der Halter das Modul mit besonders hoher Stabilität und Sicherheit an einem Träger lagern können. Schließlich ist es auch von großer Bedeutung, dass eine Verbindung zwischen einem Träger und einem Modul auf besonders flexible Weise, insbesondere ohne vordefinierte Montagepositionen, erfolgen kann, denn jede Fassade, jedes Dach, oder auch die Module selbst weisen spezifische Abmessungen auf. In manchen Fällen wird daher mit Profilleisten gearbeitet, in welche die Halter an beliebigen Positionen eingerastet werden können. Seitens der Module ist dann in einigen Fällen auch eine Montageverbindung vorgesehen, welche durch kraft- und/oder formschlüssiges Verbinden eines Modulrahmens mit dem Halter an einer beliebigen Position des Modulrahmens vorgesehen werden kann.

Die Patentanmeldung EP 2 410 190 A1 zeigt eine Befestigungseinrichtung, mit welcher eine Befestigung eines ersten Bauteils an einem zweiten Bauteil erfolgen kann, indem eine Schraube in ein Halteelement eingebracht wird und ein Klemmelement sowie ein Spreizelement mittels der Schraube an einer Unterseite eines der Bauteile mit dem Halteelement verspannt werden.

Nachteilig an dieser Einrichtung ist, dass zum einen eine große Anzahl einzelner Teile erforderlich ist, zum anderen eine Montage nur in vorbestimmten Öffnungen eines der Bauteile möglich ist. Die Öffnungen müssen an dem entsprechenden Bauteil jeweils in geeigneten Positionen vorgesehen sein, was einen größeren Aufwand bei der Montageplanung bedeuten kann.

Auf Dächern wird häufig nicht nur ein Flächenmodul, zum Beispiel Solarmodul, alleine montiert, sondern es werden in der Regel mehrere Flächenmodulen in einer flächigen Anordnung am Dach befestigt, um auf diese Weise möglichst viel Sonnenenergie, die auf das Hausdach einstrahlt, nutzen zu können. Dabei ist es vorteilhaft, einander benachbarte Flächenmodule mit derselben Haltervorrichtung bzw. denselben Haltervorrichtungen zu befestigten. Mit anderen Worten sind die Haltervorrichtungen, die zwischen zwei benachbarten Flächenmodulen zum Einsatz kommen, speziell dazu ausgelegt, zwei Flächenmodule gleichzeitig zu halten. Im Randbereich der flächigen Gesamtanordnung kommen hingegen andere Haltervorrichtungen zum Einsatz, die speziell dazu ausgelegt sind, nur mit einem einzigen Flächenmodul zusammenzuwirken, bzw. nur ein einziges Flächenmodul an den Träger zu klemmen. Nachteilig hierbei ist, dass unterschiedliche Haltervorrichtungen hergestellt werden müssen, was die Stückkostenzahl erhöht. Ferner ist es für den Monteur auf dem Dach, insbesondere wenn es sich hierbei um ein Schrägdach handelt, nicht immer einfach, je nach Montagestelle bzw. -situation die richtige Haltervorrichtung zu suchen und zu verbauen.

Die Patentanmeldung EP 2 029 946 A1 zeigt ein Montagesystem zum Befestigen eines Solarmoduls an einem Träger mit Hilfe von Befestigungsmitteln, die jeweils ein Formstück mit daran angeordneten Armen aufweisen, wobei die Arme in einem montierten Zustand in korrespondierende innenliegende Längsnuten des Trägers eingreifen. Die Längsnuten sind an der Oberfläche in Eckbereichen des Trägers ausgebildet, und die Arme können auf Zug beansprucht werden, so dass die formschlüssige Verbindung mit der Längsnut selbstsichernd wird. Ein jeweiliges Befestigungsmittel kann hierdurch eine Druckkraft auf ein zwischen einem Kopf und dem Träger angeordnetes Modul ausüben.

Nachteilig an dieser Vorrichtung ist, dass sie eine spezielle Montagesituation erfordert und ein sicherer Halt der Vorrichtung an dem Träger nur in einem montierten Zustand sichergestellt werden kann. Die Handhabung ist nicht besonders einfach.

Die Patentanmeldung EP 2 090 847 A2 beschreibt eine Befestigungsvorrichtung für Solarpaneele, bei welcher ein erstes Halteteil an Führungsstegen in einem zweiten Halteteil derart geführt ist, dass zwei Solarpaneele zwischen den Halteteilen eingeklemmt werden können.

Die Patentanmeldung EP 2 309 552 A1 beschreibt eine Klemmaufnahme zum Befestigen von z.B. Fotovoltaikmodulen, bei welcher eine Klemmkappe an einem Abstandshalter an einer Klemmaufnahme geführt ist, wobei zwischen der Klemmaufnahme und der Klemmkappe an beiden Seiten seitlich neben dem Abstandshalter zwei Module eingeklemmt werden können.

Die Gebrauchsmusterschrift DE 20 2011 107 843 U1 beschreibt eine Endklemme für gerahmte Fotovoltaikmodule, bei welcher ein Halteschenkel in unterschiedlichen Rastpositionen an einem Basiselement angeordnet werden kann.

Die Patentanmeldung EP 2 495 507 A1 beschreibt ein Befestigungselement für Solarmodulrahmen, bei welchem ein bogenförmiger Abschnitt zwischen dem Solarmodulrahmen und einer Montageschiene verspannt werden kann.

Die Patentanmeldung EP 2 662 645 A2 , die ein Dokument ist, das unter Art. 54(3) EPÜ fällt, beschreibt einen Solarmodulhalter zum klemmenden Halten eines Solarmoduls, der einen am Montageort befestigbaren Grundhalter, ein Zwischenelement und einen Klemmhalter aufweist. Eine Klemmfläche des Klemmhalters bildet mit einer Gegenklemmfläche des Grundhalters eine Halteklemme für das Solarmodul aus. Das Zwischenelement ist dabei quer zur Klemmrichtung der Halteklemme verschieblich an dem Grundhalter gehalten. Der Klemmhalter und das Zwischenelement sind ferner mittels einer eine Drehachse aufweisenden Schraubverbindung miteinander verbunden. Der Klemmhalter ist dabei über eine Verdrehsicherung in Bezug auf die Drehachse der Schraubverbindung verdrehsicher am Zwischenelement geführt.

Aufgabe der Erfindung ist es, eine Haltervorrichtung bereitzustellen, mittels welcher eine Montage von Flächenmodulen auf noch flexiblere Weise erfolgen kann, insbesondere weiter vereinfacht werden kann. Bevorzugt ist die Haltervorrichtung dabei einfach aufgebaut und ohne weitere Montagekenntnisse für eine jeweilige Montagesituation verwendbar. Weiter bevorzugt soll die Haltervorrichtung dabei auch eine besonders sichere und/oder stabile Verbindung ermöglichen.

Zumindest eine der zuvor genannten Aufgaben wird durch eine Haltervorrichtung gemäß Anspruch 1 gelöst.

Die Erfindung geht aus von einer Haltervorrichtung zum Befestigen, insbesondere zum Festklemmen, eines Flächenmoduls, insbesondere eines gerahmten Solarpaneels, an wenigstens einem Träger, insbesondere einer Profilschiene, mit:
- einem Kopfabschnitt, der eingerichtet ist zum Zusammenwirken mit dem Flächenmodul;
- einem Fußabschnitt, der eingerichtet ist zum Zusammenwirken mit dem Träger;-einem Verbindungselement, mittels welchem der Kopfabschnitt mit dem Fußabschnitt verbindbar ist, wobei der Kopfabschnitt relativ zu dem Fußabschnitt entlang einer Hochachse der Haltervorrichtung mittels des Verbindungselements verlagerbar ist.

Erfindungsgemäß ist vorgesehen, dass der Kopfabschnitt relativ zu dem Fußabschnitt in wenigstens zwei um die Hochachse zueinander verdrehten Winkelpositionen mit jeweils einem vorbestimmten (relativen) Verdrehwinkel derart lagerbar ist, dass der Kopfabschnitt in wenigstens zwei der Winkelpositionen jeweils an wenigstens einem oder wenigsten zwei Flächenmodulen lagerbar ist, insbesondere mit einem oder mehreren Anlageabschnitten, die entsprechend den jeweiligen Winkelpositionen angeordnet sind. Der Verdrehwinkel zwischen wenigstens zwei der wenigstens zwei zueinander verdrehten Winkelpositionen liegt dabei im Bereich von 90 Grad, bevorzugt beträgt er 90 Grad. Hierdurch kann die Haltervorrichtung in ein und derselben Position am Träger wahlweise ein oder zwei Flächenmodule an dem Träger fixieren, wobei der Kopfabschnitt sich dabei jeweils zum Beispiel an einer Zentralplatte des Fußabschnitts abstützen kann. Ferner weist der Kopfabschnitt eine Stützwange auf, welche sich im Wesentlichen in Richtung der Hochachse erstreckt. Hierdurch kann eine besonders stabile Haltervorrichtung bereitgestellt werden, insbesondere bei unsymmetrischer Belastung der Haltervorrichtung, falls die Haltervorrichtung nur an einem Flächenmodul zur Anlage kommen soll. Im verbundenen Zustand ist die Stützwange den Fußabschnitt in Richtung der Hochachse überlappend an dem Fußabschnitt lagerbar. Die Stützwange weist eine Breite auf, welche kleiner ist als eine Breite des Kopfabschnitts in entsprechender Richtung. Hierdurch kann der Kopfabschnitt in unterschiedliche Winkelpositionen relativ zum Fußabschnitt gebracht werden, ohne dass die Position des Fußabschnitts an dem Träger verändert werden muss. Die Stützwange kommt dabei unabhängig von der Winkelposition nicht mit dem/den Flächenmodul(en) in Kontakt. Bevorzugt ist die Zentralplatte hierzu mit einer quadratischen Grundfläche ausgeführt. Wahlweise können auch drei Flächenmodule fixiert werden. Ferner kann die Haltervorrichtung hierdurch wahlweise in unterschiedlichen Anordnungen eingesetzt werden. Es ist nur noch ein einziger Typ einer Haltervorrichtung erforderlich, unabhängig von einer Montagesituation. Eine falsche Montage mit einer nicht geeigneten Haltervorrichtung kann dadurch ausgeschlossen werden. Bei der Anordnung mehrerer Flächenmodule bleibt dem Monteur bis zur Montage die freie Wahl der Anordnung der Flächenmodule, sei es relativ zu dem Träger oder relativ zueinander. Dies liefert einen hohen Flexibilitätsgrad und erleichtert die Montageplanung bzw. Arbeitsvorbereitung. Der Kopfabschnitt ist relativ zu dem Fußabschnitt wahlweise zumindest in einer ersten definierten Winkelposition oder in einer zweiten definierten Winkelposition anordenbar bzw. lagerbar.

Als eine Haltervorrichtung ist dabei bevorzugt eine Vorrichtung zu verstehen, welche zwischen dem jeweiligen Flächenmodul mit dem korrespondierenden Träger wirkt, indem sie eine Spannkraft von dem Flächenmodul auf den Träger überträgt und das Flächenmodul dadurch mit dem Träger verspannt. Dabei können Rastverbindungen oder andere formschlüssige Kontakte vorgesehen sein, um die Verspannung zu sichern. Eine solche Haltervorrichtung kann auch als Klemmvorrichtung ausgebildet sein, bei welcher das jeweilige Flächenmodul mit dem korrespondierenden Träger ohne zusätzliche Rastverbindungen allein mittels der Haltervorrichtung verklemmt wird, insbesondere indem eine kraftschlüssige Verbindung (insbesondere basierend auf Oberflächenreibung) zwischen dem Flächenmodul und dem Träger sichergestellt wird. Die Verwendung der Haltervorrichtung als Klemmvorrichtung kann eine besonders schnelle und flexible Montage ermöglichen, wobei die einzelnen Flächenmodule variable zueinander anordenbar sind. Dies liefert speziell bei auf Dächern oder an Fassaden vormontierten Trägern Vorteile. Auch beim Austausch eines einzelnen Flächenmoduls aus einem komplexeren System mit einer Vielzahl von Flächenmodulen sind solche Klemmvorrichtungen vorteilhaft: die Klemmverbindung wird mittels der Haltervorrichtung/Klemmvorrichtung gelockert und das Flächenmodul kann entnommen werden. Gleichzeitig kann das benachbarte verbleibende Flächenmodul mit derselben Klemmvorrichtung wieder montiert werden.

Bevorzugt ist das Verbindungselement als eine Schraube ausgebildet, welche ein Gewinde aufweist, das mit einem, vorzugsweise an dem Fußteil ausgebildeten, Gegengewinde zusammenwirken kann.

Gemäß einer bevorzugten Ausführungsform ist der Kopfabschnitt relativ zum Fußabschnitt in wenigstens drei um die Hochachse zueinander verdrehten Winkelpositionen mit jeweils einem vorbestimmten Verdrehwinkel lagerbar. Dies ermöglicht eine besonders große Flexibilität bei der Montage. Der Kopfabschnitt kann z.B. dazu verwendet werden, in drei unterschiedlichen Winkelpositionen ein einziges Flächenmodul zu befestigen. Das Flächenmodul kann dabei in drei unterschiedlichen Winkelpositionen relativ zur Haltervorrichtung angeordnet sein. Der Kopfabschnitt kann auf einfache Weise in die entsprechende Winkelposition gedreht werden.

Gemäß einer bevorzugten Ausführungsform ist die Haltervorrichtung eingerichtet, in einer jeweiligen Winkelposition wahlweise - wenn der Kopfabschnitt eine erste vorbestimmte Winkelposition relativ zum Fußabschnitt aufweist - nur ein Flächenmodul an dem Träger zu befestigen oder - wenn der Kopfabschnitt eine zweite vorbestimmte Winkelposition relativ zum Fußabschnitt aufweist - zwei Flächenmodule an dem Träger zu befestigen. Hierdurch kann die gleiche Haltervorrichtung eingesetzt werden, um nur ein Flächenmodul zu halten oder zwei Flächenmodule. Bei einem bereits fertig montierten Flächenmodul kann dann auf einfache Weise ein weiteres Flächenmodul nachgerüstet werden. Hierzu kann zunächst das erste Flächenmodul verklemmt werden, und sobald das zweite Flächenmodul bereitgestellt ist, z.B. auf einem Dach, kann die Verklemmung des ersten Flächenmoduls teilweise wieder gelöst und ein gemeinsames Verklemmen beider Flächenmodule erfolgen. Dies erleichtert auch die einzelnen Arbeitsschritte bei der (De-)Montage.

Die Haltervorrichtung kann auch als Mittel-Randklemme bezeichnet werden, da sie wahlweise am Rand eines einzigen Flächenmoduls angeordnet werden kann oder mittig zwischen zwei Flächenmodulen. In beiden Anordnungen kann die Haltervorrichtung aufgrund der verschiedenen möglichen Winkelpositionen des Kopfabschnitts relativ zu dem Fußabschnitt eine Halterfunktion mit vergleichbarer Wirkung erfüllen. Damit ist die Haltervorrichtung ein voller Ersatz für mindestens einen zweiten Typ eines Halters, welcher bisher erforderlich war und speziell ausgebildet werden musste, um entweder in einem Randbereich oder mittig montiert werden zu können.

Der Verdrehwinkel kann auch im Bereich von 180 Grad liegen, bevorzugt 180 Grad betragen, und/oder im Bereich von 270 Grad liegen, bevorzugt 270 Grad betragen. Hierdurch kann der Kopfabschnitt in drei oder vier relativen Verdrehwinkeln in Bezug auf den Fußabschnitt angeordnet werden, und eine Montage kann auf besonders flexible Weise erfolgen.

Gemäß einer bevorzugten Ausführungsform überragt der Kopfabschnitt den Fußabschnitt in Richtung einer orthogonal zur Hochachse ausgerichteten Ebene, insbesondere mittels einer einstückigen Platte des Kopfabschnitts. Hierdurch kann sichergestellt werden, dass der Kopfabschnitt auf einfache Weise an einem, zwei oder drei Flächenmodulen zur Anlage gebracht werden kann, insbesondere mittels eines jeweiligen Anlageabschnitts. Die Flächenmodule können seitlich nahe am Fußabschnitt angeordnet werden oder auch am Fußabschnitt zur Anlage gebracht werden, und der Kopfabschnitt überlappt oder überragt den Fußabschnitt und damit auch das jeweilige Flächenmodul.

Die Stützwange erstreckt sich in Richtung der Hochachse derart weit, dass sie den Fußabschnitt überlappt.

Während sich bei einer Anordnung der Haltervorrichtung zwischen zwei benachbarten Flächenmodulen der Kraftfluss in der Haltervorrichtung im Wesentlichen symmetrisch verteilen kann, wird die Haltervorrichtung beim Einsatz im Randbereich einer flächigen Anordnung von Flächenmodulen unsymmetrisch und somit nicht unwesentlich auf Biegung belastet. Um eine unzulässige Verformung der Haltervorrichtung zu vermeiden, muss diese für den Einsatz im Randbereich entsprechend stabil ausgebildet werden. Die unterschiedliche Belastung der Haltervorrichtung je nach Montagesituation ist auch ein wesentlicher Grund dafür, dass die bekannten Haltervorrichtungen für unterschiedliche Montagesituationen unterschiedlich ausgebildet sind bzw. zwingend sein müssen. Mittels der Stützwange kann eine Aufnahme und Weiterleitung von Biegekräften auf zweckdienliche Weise erfolgen.

Gemäß einer bevorzugten Ausführungsform weist die Stützwange eine Breite auf, welche insbesondere maximal 2/3 der Breite des Kopfabschnitts beträgt, bevorzugt etwa die Hälfte der Breite des Kopfabschnitts. Bevorzugt ist die Breite der Stützwange dabei größer oder gleich einer Breite des Fußabschnitts in einem Bereich, in welchem die Stützwange am Fußabschnitt zur Anlage kommt. Hierdurch kann sichergestellt werden, dass die Stützwange mittelbar über den Fußabschnitt ausgerichtet und verdrehsicher am Fußabschnitt gelagert werden kann. Die Breite der Stützwange ist bevorzugt etwas größer als die Breite des Fußabschnitts im entsprechenden Kontaktbereich, so dass die Stützwange am Fußabschnitt entlang verlagert werden kann und den Fußabschnitt dabei seitlich umrahmen oder umgrenzen kann. Weiter bevorzugt ist ein Abstand von zwei gegenüberliegenden Beinen oder Führungsflächen des Fußabschnitts kleiner als die Breite der Stützwange, so dass die Stützwange auch in einer um 90° verdrehten Anordnung die beiden gegenüberliegenden Beinen oder Führungsflächen umrahmen kann. Bevorzugt entspricht der Abstand zumindest annähernd der Breite des Fußabschnitts im Kontaktbereich.

Gemäß einer bevorzugten Ausführungsform ist die Stützwange einstückig mit einer Platte des Kopfabschnitts ausgebildet, wobei sich die Platte im Wesentlichen orthogonal zur Hochachse der Haltervorrichtung erstreckt. Hierdurch kann eine in sich stabile Haltervorrichtung bereitgestellt werden, bei welcher ein Biegemoment bzw. eine Kraft von dem Kopfabschnitt mittels der Stützwange in den Fußabschnitt eingeleitet werden kann. Dabei erstreckt sich die Stützwange bevorzugt zumindest annähernd orthogonal zu der Platte. Bevorzugt ist der Kopfabschnitt dabei als Biege- oder Stanz-Biegeteil ausgeführt. Die Stützwange kann dadurch auf homogene Weise und ohne Spannungsspitzen innerhalb des Kopfabschnitts Kräfte zwischen der Platte auf dem Fußabschnitt übertragen.

Bevorzugt ist in der Platte eine Öffnung vorgesehen, durch welche das Verbindungselement geführt werden kann. Die Öffnung kann z.B. eine eingestanzte Öffnung sein oder eine Bohrung. Weiter bevorzugt ist die Öffnung konzentrisch um die Hochachse und mittig auf der Platte angeordnet. Hierdurch können auf einfache Weise mehr als zwei Anordnungen mit vorgegebenem Verdrehwinkel bereitgestellt werden.

Bevorzugt weist die Stützwange eine Außenwange und eine Innenwange auf. Weiter bevorzugt sind die Wangen V-förmig zueinander angeordnet, oder zumindest ist die Außenwange in einem Winkel zu der Innenwange angeordnet, welcher für die Aufnahme und Weiterleitung eines Biegemomentes vorteilhaft ist. Der Winkel zwischen den Wangen liegt z.B. im Bereich von 5 bis 45 Grad, bevorzugt 7 bis 25 Grad, weiter bevorzugt 10 bis 20 Grad. Dies liefert eine gute Stabilität, insbesondere Biegesteifigkeit, und eine Abstützfunktion kann auch bei größeren Kräften mit verhältnismäßig geringem Materialeinsatz und/oder kostengünstigem Ausgangsmaterial (insbesondere Blech, wie zum Beispiel Stahlblech bzw. Edelstahlblech, Kunststoffspritzguß, Aluminiumdruckguß, Zinkdruckguß) erfüllt werden. Die Biegesteifigkeit kann dabei insbesondere in Bezug auf eine Querachse optimiert werden, welche parallel zu einem zu haltenden Rand eines Flächenmoduls verläuft und orthogonal zu der Hochachse angeordnet ist. Bevorzugt ist die Außenwange in einem Winkel zu der Hochachse angeordnet, welcher z.B. im Bereich von 3 bis 30 Grad liegt, bevorzugt 5 bis 20 Grad, weiter bevorzugt 7 bis 15 Grad. Hierdurch kann eine Weiterleitung von Kräften bzw. Momenten von einer Platte des Kopfabschnitts in die Stützwange des Kopfabschnitts bei guter Stabilität bzw. Festigkeit des Kopfabschnitts erfolgen. Die beiden Wangen können dabei durch ein einstückiges, ineinander gebogenes (Blech-)Teil gebildet sein, welches im Bereich einer Wangenspitze gefaltet bzw. umgebogen ist.

Gemäß einer Variante ist die Stützwange mit einem Ende an einer Unterseite der Platte befestigt, z.B. kaltverschweißt. Die Stützwange kann an der Unterseite zum Beispiel auch mittels Durchzug, Verpressung, Punktschweißen, Verschweißen oder Nippeln befestigt sein.

Gemäß einer Variante weist die Stützwange zwei Abstützrippen auf, welche korrespondierend zu dem Fußabschnitt ausgebildet sind, d.h. die Abstützrippen sind so angeordnet, dass sie an korrespondierenden Teilen des Fußabschnitts zur Anlage kommen können. Bevorzugt ist zwischen den Abstützrippen eine Aussparung ausgebildet. Weiter bevorzugt ist die Aussparung an einer Innenwange der Stützwange ausgebildet und erstreckt sich auch über einen Teilabschnitt einer Außenwange der Stützwange, insbesondere im Bereich einer Wangenspitze, in welcher die Außenwange und die Innenwange aneinandergrenzen. Die Aussparung ist dazu ausgebildet, mit einem Vorsprung des Fußabschnitts zusammenzuwirken. Dies ist zum einen vorteilhaft, um den Kopfabschnitt verdrehsicher in einer der zueinander verdrehten Anordnungen an dem Fußabschnitt zu lagern und ein relatives Verdrehen während der Montage zu verhindern. Zum anderen kann hierdurch der Kopfabschnitts relativ zu dem Fußabschnitt in Richtung der Hochachse der Haltervorrichtung besser geführt werden.

Gemäß einer bevorzugten Ausführungsform bildet die Stützwange zusammen mit einer/der Platte des Kopfabschnitts ein L-förmiges Profil. Ein solches Profil kann auf einfache Weise hergestellt werden und liefert eine gute Stabilität der Anordnung, insbesondere dann, wenn der Winkel der beiden Schenkel des L-Profils kleiner als 90° ist, z.B. 80°, oder wenn der Schenkel, welcher die Stützwange bildet, einen Versatz nach innen aufweist, wobei der Versatz z.B. in Form einer S-Kurve ausgebildet ist.

Gemäß einer alternativen Ausführungsform weist die Stützwange eine Lasche auf, welche sich zumindest annähernd orthogonal zu der Hochachse erstreckt und welche eine Öffnung aufweist, durch welche das Verbindungselement hindurchführbar ist. Hierdurch kann unter geringem Materialeinsatz und bei einem leichten Aufbau eine hohe Stabilität sichergestellt werden, insbesondere ein hohes Biegemoment um die Querachse aufgenommen werden. Die Lasche wird durch das Verbindungselement festgehalten. Daher muss die Stützwange nicht notwendigerweise (zusätzlich) an einer Unterseite einer Platte des Kopfabschnitts fixiert werden, und auch eine Gefahr, dass sich die Stützwange von der Platte löst, kann ausgeschlossen werden. Der Kopfabschnitt kann somit als selbstsichernd bezeichnet werden, zumindest sobald das Verbindungselement darin montiert ist.

Gemäß einer bevorzugten Ausführungsform weist der Kopfabschnitt einen dreiseitigen Anlageabschnitt oder drei Anlageabschnitte, insbesondere Anlagekanten, auf, welche jeweils eingerichtet sind, am Flächenmodul, insbesondere an einem Rahmenabschnitt des Flächenmoduls, in der jeweiligen Winkelposition zur Anlage zu kommen. Hierdurch kann für jede der unterschiedlichen Winkelpositionen des Kopfabschnitts relativ zu dem Fußabschnitt der Haltervorrichtung mindestens eine Anlagekante bereitgestellt werden, über welche eine Kraftübertragung von der Haltervorrichtung auf das Flächenmodul erfolgen kann. Die Kante kann einen stumpfen Winkel, d.h. einen Winkel von weniger als 90° aufweisen. Als Material wird Metall bevorzugt, um die Eloxalschicht des gerahmten Flächenmodules zu durchstoßen.

Ein dreiseitiger Anlageabschnitt oder drei Anlageabschnitte liefern den Vorteil, dass der Kopfabschnitt besonders flexible verwendet werden kann, sei es zum Befestigen nur eines Flächenmoduls, oder zum Befestigen von zwei oder drei Flächenmodulen. Beim Befestigen von drei Flächenmodulen kommt jede Seite bzw. jeder Anlageabschnitt bevorzugt an mindestens einem Flächenmodul zur Anlage, und beim Befestigen von zwei Flächenmodulen kommen an jedem Flächenmodul bevorzugt mindestens zwei Seiten bzw. Anlageabschnitte zumindest teilweise zur Anlage. Beim Befestigen von nur einem Flächenmodul können alle drei Seiten bzw. Anlageabschnitte zumindest teilweise am Flächenmodul zur Anlage kommen.

Bevorzugt ist die Anlage jeweils linienförmig, d.h. die Anlagekanten erstrecken sich jeweils in einer einzigen Richtung. Dabei sind die Anlagekanten zweckdienlicher Weise alle in derselben Ebene angeordnet. Weiter bevorzugt sind die Anlagekanten durch freie Endbereiche des Kopfabschnitts gebildet. Die Anlagekanten können jeweils zumindest annähernd über die gesamte Erstreckung des Kopfabschnitts in der entsprechenden Richtung ausgebildet sein. Bevorzugt ist zwischen zwei aneinandergrenzenden Anlagekanten eine Aussparung in dem Kopfabschnitt ausgebildet. Hierdurch können die Anlageabschnitte z.B. durch Biegen auf einfache Weise an dem Kopfabschnitt ausgebildet werden.

Bevorzugt sind die Anlageabschnitte in einem insbesondere jeweils gleichen Winkel um die Hochachse zueinander angeordnet, weiter bevorzugt sind aneinandergrenzende

Anlageabschnitte in einem Winkel von jeweils zumindest annähernd 90 Grad zueinander angeordnet. Hierdurch kann ein gutes Verkeilen mit einem Rahmen des Flächenmoduls erfolgen, insbesondere kann eine Reibkraft von den Anlageabschnitten in unterschiedlichen Richtungen auf das Flächenmodul ausgeübt werden und/oder ein Formschluss in unterschiedlichen Form-Richtungen hergestellt werden, so dass das Flächenmodul mit größerer Stabilität an einen entsprechenden Träger gepresst werden kann. Durch eine winkelige Anordnung zueinander kann eine kreuzförmig angeordnete Kontaktfläche bereitgestellt werden, welche eine gute Sicherheit in Bezug auf ein Verrutschen eines Flächenmoduls relativ zu der Haltervorrichtung liefert.

Bevorzugt kommen in dem montierten Zustand mindestens zwei der drei zumindest abschnittsweisen Anlagekanten an dem Flächenmodul zur Anlage. Weiter bevorzugt kommt mindestens eine der Anlagekanten vollständig an dem Flächenmodul zur Anlage und eine der Anlagekanten nur über einen Teilabschnitt der Anlagekante.

Gemäß einer bevorzugten Ausführungsform sind die Seiten des Anlageabschnitts oder die jeweiligen Anlageabschnitte relativ zueinander in einem Winkel entsprechend den jeweiligen Winkelpositionen angeordnet, insbesondere zumindest teilweise in einem Winkel von 90° relativ zueinander. Diese Anordnung kann sicherstellen, dass ein Flächenmodul unabhängig von einer spezifischen Winkelposition jeweils effektiv befestigt werden kann.

Gemäß einer bevorzugten Ausführungsform sind die drei Anlageabschnitte an jeweils einem Randabschnitt des Kopfabschnitts vorgesehen, wobei die Stützwange von einem weiteren Randabschnitt des Kopfabschnitts absteht. Hierdurch kann ein einfacher Aufbau der Haltervorrichtung sichergestellt werden, und der Kopfabschnitt kann im Verhältnis zu seinen eigenen Abmessungen in einem großen Überlappungsbereich mit dem jeweiligen Flächenmodul gekoppelt werden, was die Stabilität der Verbindung erhöht.

Gemäß einer bevorzugten Ausführungsform sind die drei Anlageabschnitte durch eine Platte des Kopfabschnitts gebildet, wobei die Platte im Bereich der Anlageabschnitte vorzugsweise jeweils eine Wölbung aufweist, welche zum Fußabschnitt weist. Hierdurch können die Anlageabschnitte auf einfache Weise, insbesondere durch Biegen und insbesondere auch gleichzeitig, in dem Kopfabschnitt vorgesehen werden. Gleichzeitig kann eine gute Festigkeit sichergestellt werden, weil die Platte entgegen der späteren (Dauer-)Belastung plastisch verformt ist. Bevorzugt ist die Wölbung durch eine Falzkante gebildet, welche sich entlang eines jeweiligen Anlageabschnitts erstreckt. Die Wölbung dient dabei insbesondere - wie in einem Kuppelgewölbe - als Versteifung der Platte, um die Kraft auf effektive Weise an die Kanten übertragen zu können.

Gemäß einer bevorzugten Ausführungsform weisen die drei Anlageabschnitte jeweils an einer im montierten Zustand zum jeweiligen Flächenmodul weisenden Unterseite wenigstens ein hervorstehendes Element auf, und/oder der Fußabschnitt weist einen Eingriffsabschnitt mit wenigstens einem hervorstehenden Element auf, wobei der Kopfabschnitt und/oder der Fußabschnitt aus elektrisch leitendem Material ausgeführt sind. Hierdurch kann eine elektrische Stromableitung bzw. eine Erdungsfunktionalität (Potentialausgleich) mittels der Haltervorrichtung bereitgestellt werden. Dies erlaubt es, auf zusätzliche Ableitungskabel an dem jeweiligen Flächenmodul bzw. Träger zu verzichten. Durch das hervorstehende Element kann ein Einschnitt in die Eloxalschicht der Flächenmodulrahmen erzielt werden.

Gemäß einer bevorzugten Ausführungsform ist bzw. sind der Kopfabschnitt und/oder der Fußabschnitt als Biegeteil, bevorzugt Stanz-Biegeteil, ausgebildet. Hierdurch kann eine einfach aufgebaute, kostengünstig herstellbare und robuste Haltervorrichtung bereitgestellt werden. Bevorzugt sind der Kopfabschnitt und der Fußabschnitt jeweils als ein Stanz-Biegeteil ausgebildet. Weiter bevorzugt sind der Kopfabschnitt und der Fußabschnitt ausschließlich durch Stanzen und Biegen aus einem Blech hergestellt. Besonders bevorzugt ist die Haltervorrichtung ein dreiteiliges Zusammenbauteil, mit einem ersten einstückigen Teil als Kopfabschnitt, einem zweiten einstückigen Teil als Fußabschnitt, und mit einem Verbindungselement. Dies liefert einen einfachen, kostengünstigen und nicht zuletzt leicht handhabbaren Aufbau der Haltervorrichtung.

Gemäß einer bevorzugten Ausführungsform weist der Fußabschnitt zwei Beine auf, welche zumindest abschnittsweise relativ zueinander elastisch bewegbar sind, insbesondere in radialer Richtung senkrecht zur Hochachse, und insbesondere auch relativ zu benachbarten Flächenabschnitten des Fußabschnitts. Hierdurch kann eine einfache, insbesondere einhändige Montage der Haltervorrichtung an dem entsprechenden Träger sichergestellt werden. Die Beine können derart elastisch zueinander bewegt werden, dass sie ausreichend flexibel sind, um bei einer Klick- oder Klips-Verbindung über Vorsprünge bzw. Hinterschneidungen der Verbindung geschoben zu werden.

Der Fußabschnitt weist bevorzugt zwei Beine auf, von denen jedes einen Einstanzflächenabschnitt aufweist, der in den Fußabschnitt eingestanzt ist und welcher gegenüber einem Abstützabschnitt bzw. einem benachbarten Teil des jeweiligen Beins nach innen versetzt ist oder elastisch nach innen verlagerbar ist. Der Abstützabschnitt kann dabei durch eine Anlagefläche gebildet sein, an welcher die Stützwange in einer der möglichen Verdrehpositionen zur Anlage kommen kann. An dem Einstanzflächenabschnitt ist bevorzugt ein Eingriffsabschnitt ausgebildet, welcher einen Haken aufweist, mittels welchem der Fußabschnitt zumindest formschlüssig mit dem Träger in Eingriff gebracht werden kann.

Bevorzugt ist der Einstanzflächenabschnitt nur an einer Seite, insbesondere an der zu dem Kopfabschnitt weisenden Seite elastisch an dem restlichen Teil des Beins gelagert. Hierdurch kann der Einstanzflächenabschnitt auf einfache Weise elastisch verlagert werden, insbesondere nach innen gebogen werden, um die Haltervorrichtung mit dem Träger in Eingriff bringen zu können. Der Fußabschnitt kann mit einer Hand ergriffen werden, und zwei Finger der Hand können an gegenüberliegenden Einstanzflächenabschnitten zur Anlage gebracht werden und die Einstanzflächenabschnitten elastisch eindrücken. Ein Formschluss kann z.B. durch eine Klick- oder Rastverbindung hergestellt werden, so dass der Fußabschnitt auch als Klickfuß bezeichnet werden kann. Dabei kann eine einfache Handhabung der Haltervorrichtung sichergestellt werden, insbesondere auch eine einhändige Montage der Haltervorrichtung in dem Träger. Der Haken ist bevorzugt durch einen Flächenabschnitt gebildet, welcher in den Eingriffsabschnitt eingestanzt und gegenüber dem benachbarten Teil des Eingriffsabschnitts hervorgebogen ist. Hierdurch kann vorteilhaft auch eine akustische Rückmeldung für den Monteur durch ein Klick-Geräusch erzielt werden.

Bevorzugt weist der Eingriffsabschnitt eine Breite auf, welche größer ist als die Breite eines korrespondierenden Beins. Hierdurch kann die Haltervorrichtung auf besonders stabile Weise an einem Träger angeordnet werden, auch wenn noch keine Montage mit einem Flächenmodul erfolgt ist und die Haltervorrichtung frei von dem Träger absteht. Bei einem entsprechend breiten Eingriffsabschnitt kann die Haltervorrichtung nicht auf einfache Weise aus dem Träger herausfallen oder herausgehebelt werden, sondern der bzw. die Einstanzflächenabschnitt(e) muss bzw. müssen hierzu gezielt elastisch verbogen werden. Dies erfolgt jedoch nicht ohne eine entsprechende Handhabung, insbesondere weil die Einstanzflächenabschnitte nach innen gegenüber dem benachbarten Teil der Beine versetzt sind. Weiter bevorzugt liegt die Breite des Eingriffsabschnitts im Bereich der Hälfte eines Umfangs des Fußabschnitts um die Hochachse, insbesondere entspricht die Breite zumindest annähernd der Hälfte des Umfangs. Hierdurch kann bei einem Stanz-Biegeteil das gesamte Material ausgenutzt werden und vorteilhaft für die Funktion der Haltervorrichtung eingesetzt werden. Besonders bevorzugt ist der Haken zumindest annähernd über die gesamte Breite des Eingriffsabschnitts ausgebildet. Hierdurch kann die Stabilität, insbesondere die Stabilität der Anordnung bzw. Befestigung in dem Träger, weiter verbessert werden. Ein Kontaktdruck an den Schnittstellen zum Träger kann gering gehalten werden.

Bevorzugt weist der Eingriffsabschnitt an seiner Unterseite eine Auflagekante auf, mittels welcher der Fußabschnitt mit einem Träger in Anlage kommen kann. Indem der Eingriffsabschnitt möglichst breit ausgeführt ist und die Auflagekante bevorzugt über der gesamten Breite des Eingriffsabschnitts vorgesehen ist, kann eine Haltervorrichtung bereitgestellt werden, welche sich auf besonders stabile und sichere Weise mit einem Träger verbinden lässt. Dies erleichtert die Montage von Flächenmodulen, insbesondere auf einer Dachschräge, so dass die Haltervorrichtung auch zunächst nur mit dem Träger verbunden werden kann und frei an dem Träger gelagert sein kann, ohne unmittelbar im Anschluss daran die Haltervorrichtung mit einem Flächenmodul verbinden zu müssen.

Gemäß einer Variante weist der Fußabschnitt einen Vorsprung bzw. eine hervorstehende Verdrehsicherung auf, welche(r) dazu ausgebildet ist, mit der Stützwange, insbesondere einer Aussparung in der Stützwange zusammenzuwirken. Weiter bevorzugt weist der Fußabschnitt vier Verdrehsicherungen auf, welche in Bezug auf die Hochachse jeweils in zueinander um 90 bzw. 180 bzw. 270 Grad verdrehten Anordnungen angeordnet sind. Hierdurch kann der Kopfabschnitt an vier Seiten des Fußabschnitts in einer jeweiligen Verdrehwinkel-Anordnung mit einem jeweils vorgegebenen Verdrehwinkel geführt und zentriert werden.

Gemäß einer bevorzugten Ausführungsform weist der Fußabschnitt eine Führungsfläche und/oder eine Anlagefläche jeweils zum Abstützen der Stützwange auf, an welcher die Stützwange im vorbestimmten Verdrehwinkel relativ zum Fußabschnitt lagerbar und/oder verlagerbar ist. Hierdurch kann eine stabile Anordnung bereitgestellt werden, bei welcher ein Biegemoment von der Stützwange auf den Fußabschnitt auf stabile und insbesondere auch symmetrische Weise möglich ist. Die Führungsfläche kann wahlweise auch als ein oder mehrere Stege ausgebildet sein bzw. durch ein oder mehrere Stege bereitgestellt sein. Bevorzugt weist die Haltervorrichtung zwei Beine auf, an welchen jeweils zwei Stege bzw. zwei Führungsflächen ausgebildet sind, wobei die Stützwange in einer jeweiligen Anordnung mit vorgegebenem Verdrehwinkel bevorzugt an zwei der vier Stege bzw. Führungsflächen zur Anlage kommt. Ein jeweiliger Steg kann dabei durch eine Schmalseite des Fußabschnitts gebildet sein. Wahlweise kann der Steg auch durch einen hervorstehenden Teil, z.B. eine Schiene oder eine Materialverdickung, gebildet sein.

Eine jeweilige Führungsfläche kann dabei durch einen umgebogenen Flächenabschnitt des Fußabschnitts gebildet sein. Bevorzugt weist der Fußabschnitt eine Zentralplatte auf, in welcher ein Innengewinde vorgesehen ist, welches mit dem Verbindungselement zusammenwirkt, und die Flächenabschnitte sind an die Zentralplatte herangebogen und in einem Winkel von zumindest annähernd 90 Grad zu der Zentralplatte angeordnet. Dies stellt einen kompakten, symmetrischen und stabilen Aufbau sicher. Dabei kann der Fußabschnitt dennoch auf einfache Weise hergestellt werden. Bevorzugt ist das Innengewinde mittig in der Zentralplatte angeordnet. Hierdurch können auf einfache Weise mehrere Anordnungen in einem vorgegebenen Verdrehwinkel bereitgestellt werden, insbesondere zwei bis vier Anordnungen. Durch die Anlagefläche kann eine Abstützung der Stützwange in einer (weiteren) Verdreh-Anordnung bereitgestellt werden.

Bevorzugt ist die Führungsfläche derart an die Zentralplatte herangebogen und derart in Bezug auf die Zentralplatte angeordnet, dass zwischen der Zentralplatte und der Führungsfläche eine Einbuchtung gebildet ist.

Bevorzugt weist die Zentralplatte eine Breite auf, welche zumindest annähernd der Breite der Stützwange entspricht. Hierdurch kann eine besonders stabile Abstützung des Kopfabschnitts an dem Fußabschnitt sichergestellt werden. Weiter bevorzugt ist die Einbuchtung zumindest annähernd über die gesamte Breite der Zentralplatte ausgebildet. Hierdurch kann mittels der Einbuchtung ein Gegenlager für eine Wangenspitze der Stützwange bereitgestellt werden, in welchem die Wangenspitze wahlweise angeordnet werden kann. Auf diese Weise kann die Montage des Flächenmoduls auf dem Träger mit einer vorgebbaren Vorspannkraft erfolgen, denn der Kopfabschnitt wird dann bevorzugt nur so weit auf den Fußabschnitt geschraubt bzw. geschoben, bis die Wangenspitze in der Einbuchtung zur Anlage kommt. Hierdurch kann auch eine Überlastsicherung für die Haltervorrichtung bereitgestellt werden und/oder eine Haltervorrichtung mit vorgebbarer Kraftwirkung auf das Flächenmodul, z.B. bei besonders empfindlichen Rahmen von Flächenmodulen. Hierdurch kann auch eine Beschädigung, z.B. ein Bruch des Glases des Photovoltaik-Laminates vermieden werden.

Gemäß einer bevorzugten Ausführungsform ist der Fußabschnitt im Querschnitt U-förmig und weist zwei gegenüberliegende Anlageflächen auf, an welchen eine/die Stützwange zur Anlage kommt und mittels Umkantungen relativ zum Fußabschnitt positionierbar ist. Hierdurch kann der Kopfabschnitt verdrehsicher am Fußabschnitt geführt werden.

Gemäß einer bevorzugten Ausführungsform weist der Fußabschnitt einen Führungsabschnitt auf, welcher an einer/der Anlagefläche angeordnet ist und eingerichtet ist, das Verbindungselement zum Positionieren des Kopfabschnitts relativ zum Fußabschnitt zu führen. Diese Anordnung erleichtert die Montage und kann die Stabilität der Anordnung erhöhen. Gleichzeitig kann wahlweise auch eine Vorspannung von Beinen oder Flächen des Fußabschnitts nach außen bewirkt werden.

Gemäß einer bevorzugten Ausführungsform ist das Verbindungselement derart im Fußabschnitt geführt, dass die Haltervorrichtung selbstsichernd ist. Hierdurch kann die Funktionalität der Haltervorrichtung weiter verbessert werden. Die Selbstsicherung kann z.B. dadurch herbeigeführt werden, dass das Verbindungselement innen an Anlageabschnitten von Eingriffsabschnitten des Fußabschnitts zur Anlage kommt.

Die zuvor genannte Aufgabe wird auch durch ein System mit wenigstens einem Flächenmodul, insbesondere einem gerahmten Solarpaneel, wenigstens einem Träger, insbesondere einer Profilschiene, und wenigstens einer erfindungsgemäßen Haltervorrichtung gelöst.

Gemäß einer bevorzugten Ausführungsform ist die Haltervorrichtung mit dem wenigstens einen Flächenmodul und dem Träger verbunden, indem der Fußabschnitt der Haltervorrichtung formschlüssig in den Träger eingreift, und dabei vorzugsweise auf Zug beansprucht wird, und der Kopfabschnitt auf dem wenigstens einen Flächenmodul, vorzugsweise mit mindestens zwei Anlageabschnitten, zur Anlage kommt, und dabei vorzugsweise im Wesentlichen auf Biegung beansprucht wird. Hierdurch kann auf einfache und sichere Weise ein Verklemmen des Flächenmoduls mit dem Träger erfolgen.

Gemäß einer bevorzugten Ausführungsform weist der Träger wenigstens einen hervorstehenden, insbesondere innenliegenden Randabschnitt auf, in welchen ein Eingriffsabschnitt des Fußabschnitts der Haltervorrichtung formschlüssig eingreifen kann. Hierdurch kann ein Montagesystem bereitgestellt werden, bei welchem die Haltervorrichtung auf besonders sichere Weise zunächst in dem Träger montiert werden kann.

Gemäß einer bevorzugten Ausführungsform weist die Haltervorrichtung drei Anlageabschnitte auf, von denen mindestens zwei an einem jeweiligen Flächenmodul zur Anlage kommen. Hierdurch kann der Kopfabschnitt mit verbessertem Halt an einem Rahmen des Flächenmoduls zur Anlage kommen. Im Vergleich zu nur einer einzelnen Anlagefläche ist die Gefahr vermindert, dass der Kopfabschnitt sich relativ zu dem Flächenmodul verlagert.

In den nachfolgenden Zeichnungsfiguren wird die Erfindung noch näher beschrieben. Aus Gründen der Übersichtlichkeit sind einigen Bezugszeichen nicht in allen Zeichnungsfiguren angegeben bzw. erläutert. In diesen Fällen wird daher auf die jeweiligen anderen Zeichnungsfiguren Bezug genommen. Es zeigen:
- Fig. 1: in einer perspektivischen Ansicht in schematischer Darstellung eine Haltervorrichtung gemäß einem Ausführungsbeispiel der Erfindung in einer von mehreren möglichen Winkelpositionen;
- Fig. 2: in einer weiteren perspektivischen Ansicht in schematischer Darstellung die in der Fig. 1 gezeigte Haltervorrichtung;
- Fig. 3: eine Seitenansicht der in der Fig. 1 gezeigten Haltervorrichtung;
- Fig. 4: eine Draufsicht der in der Fig. 1 gezeigten Haltervorrichtung in der Funktion als Mittel klemme;
- Fig. 5: in einer perspektivischen Ansicht in schematischer Darstellung die in der Fig. 1 gezeigte Haltervorrichtung in einer von mehreren möglichen Winkelpositionen in einem montierten Zustand an einem Träger;
- Fig. 6: in einer weiteren perspektivischen Ansicht in schematischer Darstellung die in der Fig. 5 gezeigte Haltervorrichtung mit dem Träger;
- Fig. 7: eine Vorderansicht der in der Fig. 5 gezeigten Haltervorrichtung und des Trägers;
- Fig. 8: eine Seitensicht der in der Fig. 5 gezeigten Haltervorrichtung und des Trägers;
- Fig. 9a: in einer weiteren perspektivischen Ansicht in schematischer Darstellung die in der Fig. 1 gezeigte Haltervorrichtung in der Funktion als Randklemme;
- Fig. 9b: in einer weiteren perspektivischen Ansicht in schematischer Darstellung die in der Fig. 1 gezeigte Haltervorrichtung in einer weiteren Winkelposition in der Funktion als Mittelklemme;
- Fig. 10: in einer Seitenansicht in schematischer Darstellung eine Haltervorrichtung gemäß einem weiteren Ausführungsbeispiel der Erfindung in einer von mehreren möglichen Winkelpositionen in einem montierten Zustand an einem Träger;
- Fig. 11: eine Draufsicht der in der Fig. 10 gezeigten Haltervorrichtung in der Funktion als Mittelklemme;
- Fig. 12A, 12B: eine Vorderansicht und eine Seitenansicht eines Kopfabschnitts einer Haltervorrichtung gemäß einem weiteren Ausführungsbeispiel;
- Fig. 13A, 13B: eine Seitenansicht und eine Draufsicht eines Fußabschnitts einer Haltervorrichtung gemäß dem weiteren, in Fig. 12A, 12B gezeigten Ausführungsbeispiel der Haltervorrichtung;
- Fig. 14A, 14B, 14C: eine Schnittansicht und eine Vorderansicht der in den Fig. 12A, 12B, 13A, 13B gezeigten Haltervorrichtung in einem zusammengesetzten Zustand entsprechend einer an einer Profilschiene montierten Anordnung; und
- Fig. 15A, 15B: perspektivische Seitenansichten des Kopfabschnitts und des Fußabschnitts der in den Figuren 12A bis 14C beschriebenen Haltervorrichtung.

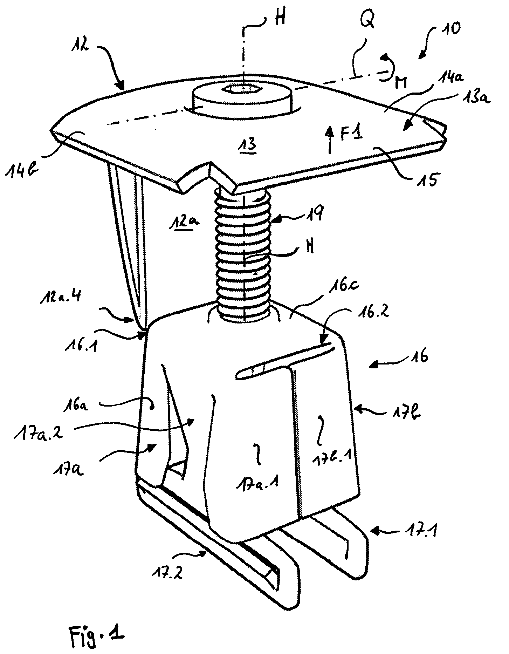

In der Fig. 1 ist eine Haltervorrichtung 10 gezeigt, welche einen Kopfabschnitt 12 und einen mittels einer Schraube 19 mit dem Kopfabschnitt 12 verbundenen Fußabschnitt 16 aufweist. Die Schraube 19 ist durch eine Platte 13 des Kopfabschnitts 12 geführt und greift in ein Gegengewinde einer Zentralplatte 16c des Fußabschnitts 16 ein. Die Schraube 19 ist entlang einer Hochachse H ausgerichtet und kann mittig durch die Platte 13 und die Zentralplatte 16c geführt sein. Die Platte 13 ist um die Hochachse H relativ zu der Schraube 19 verschwenkbar und in unterschiedlichen Winkelpositionen anordenbar, speziell vier unterschiedlichen Winkelpositionen. Die Platte 13 weist drei Anlageabschnitte 14a, 14b, 15 auf, welche jeweils durch eine Wölbung 13a in der Platte 13 gebildet sind. Die Anlageabschnitte 14a, 14b, 15 stehen nach unten in Bezug auf die ansonsten zumindest annähernd ebene Ausrichtung der Platte hervor, so dass Anlagekanten gebildet werden. Mittels der Anlagekanten kann die Platte 13 mit einem oder zwei (oder wahlweise auch drei) Flächenmodulen gekoppelt werden. An diesen Anlagekanten können auch (nicht dargestellte) insbesondere nach unten in Richtung der Hochachse H hervorstehende Elemente vorgesehen sein, welche bei einem Verklemmen mit einem Flächenmodul in das Flächenmodul eingedrückt werden können und einen elektrischen Kontakt zwischen der Platte 13 und dem Flächenmodul herstellen können, insbesondere indem eine Oberflächenbeschichtung, z.B. eine Eloxierung, des Flächenmoduls durchbrochen wird.

An einem der Anlageabschnitte 15 ist ein Kraftpfeil F1 angedeutet, welcher eine Kraft symbolisiert, welche von einem (nicht dargestellten) Flächenmodul auf die Platte 13 einwirkt und ein Biegemoment M um eine Querachse Q hervorruft. Das Biegemoment M entsteht vor allem dann, wenn die Haltervorrichtung 10 mit nur einem Flächenmodul gekoppelt wird bzw. nur ein Flächenmodul an der Anlagekante 15 festklemmt. Die Anlagekanten 14a, 14b, 15 sind derart angeordnet, dass sie zumindest paarweise an einem jeweiligen Flächenmodul zur Anlage kommen können. Für den Fall dass ein einziges Flächenmodul festgeklemmt wird, kann die Anlagekante 15 vollständig an dem Flächenmodul zur Anlage kommen und die Anlagekanten 14a, 14b jeweils mit einem kurzen Abschnitt seitens der Anlagekante 15. Für den Fall dass zwei gegenüberliegende Flächenmodule festgeklemmt werden, können die Anlagekanten 14a, 14b jeweils vollständig an dem jeweiligen Flächenmodul zur Anlage kommen und die Anlagekanten 15 kann an jedem der Flächenmodule mit einem kurzen Abschnitt seitens der Anlagekanten 14a, 14b zur Anlage kommen. Dies stellt eine sicherere Klemmung her, da Klemmkanten in unterschiedlichen Richtungen eine Klemmkraft bzw. einen Reibschluss ausüben können.

Das Biegemoment M wird im Wesentlichen durch eine Stützwange 12a von dem Kopfabschnitt 12 auf den Fußabschnitt 16 übertragen bzw. dort als Anpresskraft eingeleitet. Der Fußabschnitt 16 weist hierzu mit der Stützwange 12a zusammenwirkende Flächen bzw. Abschnitte auf, nämlich die Anlagefläche 16a und die Einbuchtungen 16.1, 16.2, wobei die Stützwange 12a in der gezeigten Anordnung in einer der Einbuchtungen 16.1 zur Anlage kommt bzw. sich dort abstützen kann. Mit der Einbuchtung 16.1 kann dabei wahlweise auch eine Begrenzung bzw. ein Anschlag bereitgestellt werden, bis zu welcher/welchem die Stützwange 12a an dem Fußabschnitt 16 entlang verlagert werden kann, um eine vordefinierbare Klemmkraft einzustellen. Dabei kann eine Wangenspitze 12a.4 der Stützwange 12a in der Einbuchtung 16.1 zur Anlage kommen. Der Fußabschnitt 16 weist ferner zwei Beine 17a, 17b auf, in welchen jeweils ein Einstanzflächenabschnitt 17a.2 vorgesehen ist, an welchem jeweils ein Eingriffsabschnitt 17.1, 17.2 ausgebildet ist. Die Eingriffsabschnitte 17.1, 17.2 sind dazu vorgesehen, mit einem entsprechenden Profil eines Trägers (nicht dargestellt) zusammenzuwirken. An den Beinen 17a, 17b ist ferner jeweils eine Führungsfläche 17a.1, 17b.1 vorgesehen, an welchen die Stützwange 12a in einer weiteren Anordnung zur Anlage kommen kann. Die Zentralplatte 16c weist eine rechteckige, insbesondere quadratische Grundform auf. Hierdurch kann die Stützwange 12a an allen vier Seiten der Zentralplatte 16c zur Anlage kommen bzw. an allen vier Seiten an der Zentralplatte 16c vorbeigeführt werden und in einem definierten Abstand zu der Hochachse H gehalten werden.

Die Haltervorrichtung 10 ist als Stanz-Biegeteil ausgeführt. Der Kopfabschnitt 12 kann dabei aus einem Teil gebildet sein, insbesondere indem aus einer (Blech-)Platte die Kontur für die Platte 13 (mit einer darin vorgesehenen Öffnung für die Schraube 19) und die Stützwange 12a gestanzt wird, um dann die Wölbungen 13a einzubringen und die Stützwange 12a zu biegen. Auch der Fußabschnitt 16 kann dabei aus einem Teil gebildet sein, insbesondere indem ausgehend von einer (Blech-)Platte ein Innengewinde in die Zentralplatte 16c geschnitten wird und der (jeweilige) Einstanzflächenabschnitt 17a.2 eingestanzt wird, die Eingriffsabschnitte 17.1, 17.2 ausgebildet werden, und dann die (jeweilige) Führungsfläche 17a.1, 17b.1 umgebogen wird. Auf diese Weise kann eine schnelle, kostengünstige Herstellung und ein niedriger Stückkostenpreis sichergestellt werden.

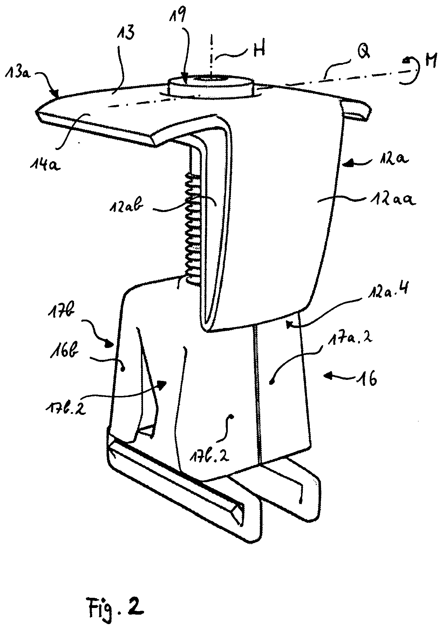

In der Fig. 2 sind eine Außenwange 12aa und eine Innenwange 12ab der Stützwange 12a gezeigt, die V-förmig zueinander angeordnet sind. Die Innenwange 12ab ist an der Schraube 19 abgestützt. Die Stützwange 12a ist einstückig mit der Platte 13 aus einem plattenförmigen Material hergestellt. Die Wölbungen 13a können durch Biegen eingebracht werden. Ferner sind weitere Führungsflächen 17a.2, 17b.2 sowie ein weiterer Einstanzflächenabschnitt 17b.2 gezeigt. Die Stützwange 12a kann an den Führungsflächen 17a.2, 17b.2 entlang gleiten.

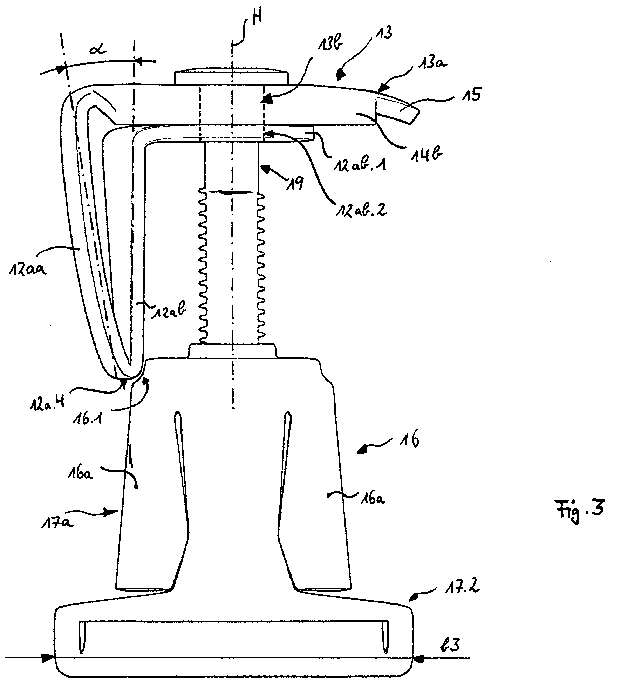

In der Fig. 3 ist schematisch angedeutet, wie die Schraube 19 durch die Platte 13 geführt sein kann, und wie die Innenwange 12ab an der Schraube 19 abgestützt sein kann. Die Platte 13 weist eine Öffnung 13b auf, die durch eine Strichlinie angedeutet ist. Die Öffnung 13b kann z.B. eine Bohrung oder eine Einstanzung sein. Die Innenwange 12ab weist eine Lasche 12ab.1 auf, welche sich zumindest annähernd orthogonal zu der Schraube 19 erstreckt. Die Innenwange 12ab ist damit im Querschnitt zumindest annähernd rechtwinklig ausgebildet. In der Lasche 12ab.1 ist eine Öffnung 12ab.2 vorgesehen, die durch eine Strichlinie angedeutet ist. Die Öffnung 12ab.2 kann z.B. eine Bohrung oder Einstanzung sein. Die Schraube 19 ist durch die Öffnung 12ab.2 geführt. Hierdurch kann eine Abstützung der Stützwange 12a sowohl an dem Fußabschnitt 16, insbesondere in der Einbuchtung 16.1, als auch an der Schraube 19 erfolgen. Dies liefert eine gute Stabilität. Die Lasche 12ab.1 ist dabei dazu ausgebildet, einer Zugbeanspruchung standzuhalten. Dabei sind die Innenwange 12ab und die Außenwange 12aa zueinander in einem Winkel α von etwa 10 Grad angeordnet, wobei die Innenwange 12ab zumindest annähernd parallel zu der Hochachse H angeordnet ist. Hierdurch kann eine Kraft bzw. ein Moment mit einem vorteilhaften Winkel von der Platte 13 auf den Fußabschnitt 16 übertragen werden. Bevorzugt ist die Außenwange 12aa dabei in einem solchen Winkel ausgerichtet, dass sie in ihrer Verlängerung nach unten in Richtung des Eingriffsabschnitts 17.2 im Bereich der Hochachse H mit dem Eingriffsabschnitt 17.2 zusammenfallen würde. Hierdurch kann eine von der Stützwange 12a auf den Fußabschnitt 16 ausgeübte Kraft zentrisch im Bereich der Hochachse H in einen Träger geleitet werden, was eine stabile Anordnung ermöglicht.

Der Eingriffsabschnitt 17.2 weist eine Breite b3 auf, welche größer ist als eine Erstreckung der Anlagefläche 16a in entsprechender Richtung. Die Breite b3 liegt in der Größenordnung der Erstreckung der Platte 13 in entsprechender Richtung. Hierdurch kann eine Klemmkraft zwischen dem jeweiligen Anlageabschnitt 14b und einem Flächenmodul einerseits und eine Kraft zwischen dem jeweiligen Eingriffsabschnitt 17.2 und einem Träger über einen vergleichbaren Längenabschnitt aufgebracht werden, wodurch einerseits eine stabile Anordnung und andererseits vergleichbare Kontaktkräfte an beiden Schnittstellen sichergestellt werden können.

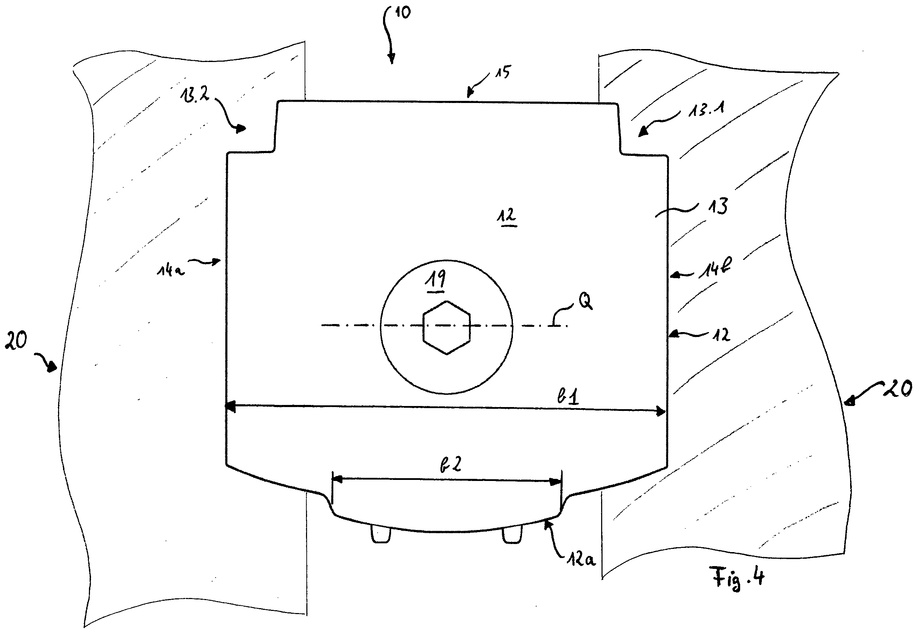

In der Fig. 4 sind Aussparungen 13.1, 13.2 an den beiden Ecken der Seiten der Platte 13 gezeigt, an welchen die Stützwange 12a nicht vorgesehen ist. Die Aussparungen 13.1, 13.2 liefern den Vorteil, dass die Anlageabschnitte 14a, 14b, 15 auf einfache Weise durch eine jeweilige in der Platte 13 vorgesehene Wölbung gebildet werden können, wobei die Aussparungen 13.1, 13.2 eingebracht (insbesondere eingestanzt) werden, bevor die Wölbungen vorgesehen werden. Die Platte 13 weist dabei eine rechteckige, insbesondere quadratische Grundform auf. Die Anlageabschnitte 14a, 14b, 15 sind abgesehen von den Aussparungen 13.1, 13.2 jeweils über die gesamte Seitenlänge der Platte 13 ausgebildet. Die Platte 13 weist eine Breite b1 auf. Die Stützwange 12a weist eine Breite b2 auf, die kleiner ist als die Breite b1 der Platte 13. Die Platte 13 überlappt die Stützwange 12a an beiden Seiten der Stützwange 12a. Hierdurch kann sichergestellt werden, dass eine jeweilige Anlagekante 14a, 14b an einem jeweiligen Flächenmodul 20 zur Anlage kommen kann. Die Flächenmodule 20 sind in der Fig. 4 nur zwecks besserem Verständnis angedeutet. Zusätzlich zu der jeweiligen Anlagekante 14a, 14b kommt auch ein kurzer Abschnitt der Anlagekante 15 an einem jeweiligen Flächenmodul 20 zur Anlage. Dies stellt eine sicherere Verklemmung bereit. Der kurze Abschnitt der Anlagekante 15 kann z.B. sicherstellen, dass sich ein Flächenmodul 20 nicht entlang der Erstreckungsrichtung der jeweiligen Anlagekante 14a, 14b relativ zu der Haltervorrichtung 10 verlagert. In der Funktion als Mittelklemme dient die Haltervorrichtung 10 insbesondere auch dazu, die beiden von ihr gehaltenen Module auf eine vorbestimmte Distanz zueinander zu halten.

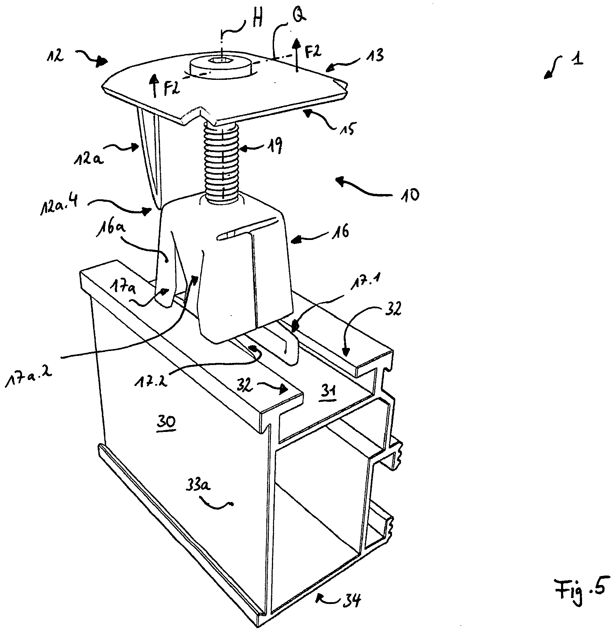

In der Fig. 5 ist ein System 1 aus einer Haltervorrichtung 10 (insbesondere der in der Fig. 1 gezeigten Haltervorrichtung) und einem Träger 30 gezeigt, wobei die Haltervorrichtung 10 mit einem oder zwei aus Gründen der Übersichtlichkeit nicht dargestellten Flächenmodulen verklemmt sein kann, bei um 90° verdrehter Anordnung des Kopfabschnitts relativ zum Fußabschnitt. An der Platte 13 der Haltervorrichtung 10 sind zwei Kraftpfeile F2 angedeutet, welche jeweils eine Kraft symbolisieren, welche im fertig montierten Zustand von zwei (nicht dargestellten) Flächenmodulen auf die Platte 13 einwirken würde, sofern die Haltervorrichtung 10 als Mittelklemme eingesetzt wird. Im Gegensatz dazu greift bei einer Anordnung als Randklemme nur eine Kraft gegenüberliegend von der Stützwange 122 an der Platte 13 des Kopfabschnitts 12 an. Die Kräfte F2 rufen weniger ein Biegemoment um die Querachse Q hervor als eine Zugkraft auf die Schraube 19 und ein Biegemoment innerhalb der Platte 13, welches aber nicht über die Stützwange 12a auf den Fußabschnitt 16 übertragen werden muss. Bei dieser beispielhaft angedeuteten Belastung wirkt der Kopfabschnitt 12 im Wesentlichen mittels der auf Zug belasteten Schraube 19 mit dem Fußabschnitt 16 zusammen. Die Stützwange 12a hat bei dieser Belastung keine vorrangige Funktion einer Kraftübertragung. Mittels der Stützwange 12a kann jedoch auch bei dieser Belastung der Haltervorrichtung 10 eine bestimmte Klemmkraft eingestellt werden, insbesondere indem die Wangenspitze 12a.4 in einer vordefinierten Position an dem Fußabschnitt 16 zur Anlage gebracht wird. Nichtsdestotrotz kann auch ein weiteres Flächenmodul vorgesehen sein, nämlich am Anlageabschnitt 15 gegenüberliegend zur Stützwange 12a. In diesem Fall hätte die Stützwange 12a auch die Funktion, ein um die Querachse Q hervorgerufenes Biegemoment in den Fußabschnitt 16 weiterzuleiten.

Der Träger 30 ist als Profilschiene mit einem an einer Modulseite 31 des Trägers 30 vorgesehenen Innenprofil 32 ausgebildet. Die Haltervorrichtung 10 ist an der Modulseite 31 mit der Profilschiene 30 mittels der Eingriffsabschnitte 17.1, 17.2 gekoppelt. Die Profilschiene 30 weist eine Lateralfläche 33a und eine Unterseite 24 auf. Die Beine 17a des Fußabschnitts 16 können dabei auf der Modulseite 31 zur Anlage kommen. Ferner ist einer der Einstanzflächenabschnitte 17a.2 gezeigt, welcher (wie auch der andere nicht erkennbare Einstanzflächenabschnitt) gegenüber der Anlagefläche 16a nach innen verbogen ist bzw. versetzt angeordnet ist. Mittels der Einstanzflächenabschnitte kann dadurch eine Klips-Verbindung bereitgestellt werden, die einfach handhabbar ist, insbesondere einhändig, was vorteilhaft ist bei einer Montage z.B. auf einem schrägen Dach.

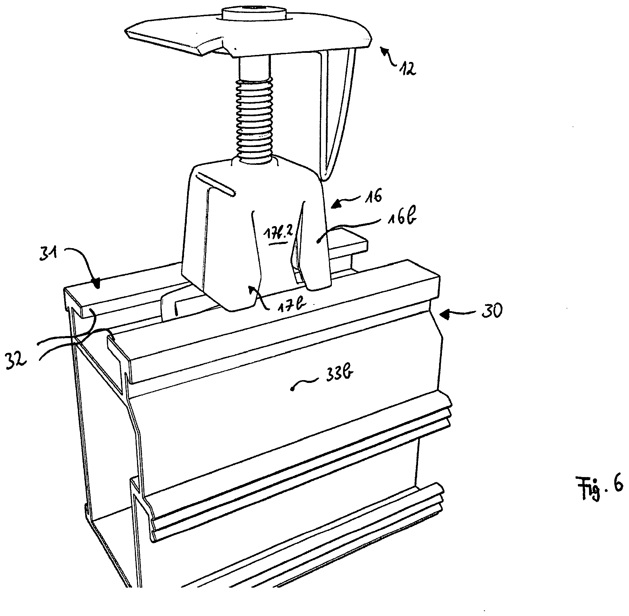

In der Fig. 6 ist einer der Einstanzflächenabschnitte 17b.2 gezeigt, welcher gegenüber der Anlagefläche 16b nach innen verbogen ist bzw. versetzt angeordnet ist. In dieser Anordnung übt der Einstanzflächenabschnitt 17b.2 eine elastische Vorspannkraft auf das Innenprofil 32 aus. Ferner ist eine weitere Lateralfläche 33b gezeigt, an welcher ein weiteres Profil vorgesehen ist. An diesem Profil kann optional ebenfalls eine Haltervorrichtung oder eine weitere Montagevorrichtung angeordnet werden, oder der Träger 30 kann daran direkt mit einer Strebe eines Dachs oder einer Fassade verbunden werden.

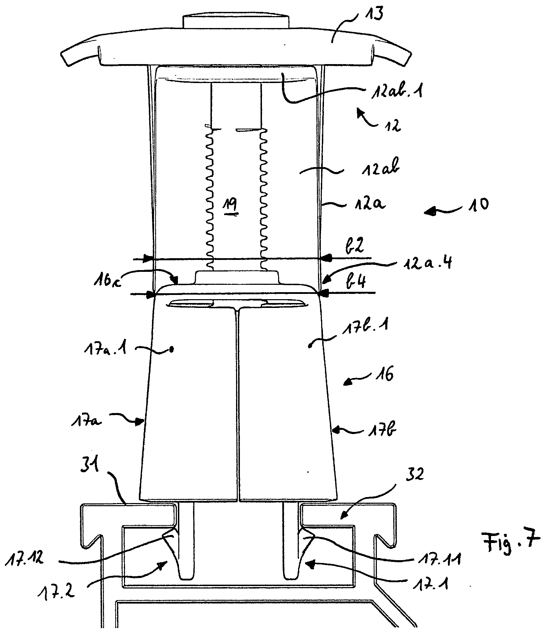

In der Fig. 7 ist gezeigt, dass die Breite b2 der Stützwange 12a zumindest annähernd einer Breite b4 der Zentralplatte entspricht. Hierdurch kann die Stützwange 12a über einen großen Bereich eine Kraft in den Fußabschnitt 16 einleiten, ohne dass (punktförmige) Spannungsspitzen entstehen. Die Breite b2 der Stützwange 12a ist zumindest weitgehend einheitlich, d.h. auch die Wangenspitze 12a.4 weist eine Breite in der Größenordnung der Breite b4 auf. Hierdurch kann eine Kraft über eine möglichst große Fläche und damit bei möglichst geringem Druck auf den Fußabschnitt 16 übertragen werden. Die Innenwange 12ab.1 ist bis unter die Platte 13 zurückgeführt, so dass die Lasche 12ab.1 unterhalb der Platte 13 an die Platte 13 angrenzend angeordnet ist. Hierdurch kann sichergestellt werden, dass die Funktionalität der Stützwange 12a zumindest weitgehend unabhängig davon ist, in welchem Abstand die Platte 13 zu der Zentralplatte 16c angeordnet ist, also mit welcher Klemmhöhe die Haltervorrichtung 10 montiert werden muss. Die Eingriffsabschnitte 17.1, 17.2 weisen Haken 17.11, 17.12 auf, welche das Innenprofil 32 hintergreifen. Die Haken 17.11, 17.12 können z.B. durch Biegen an den Eingriffsabschnitte 17.1, 17.2 ausgebildet werden.

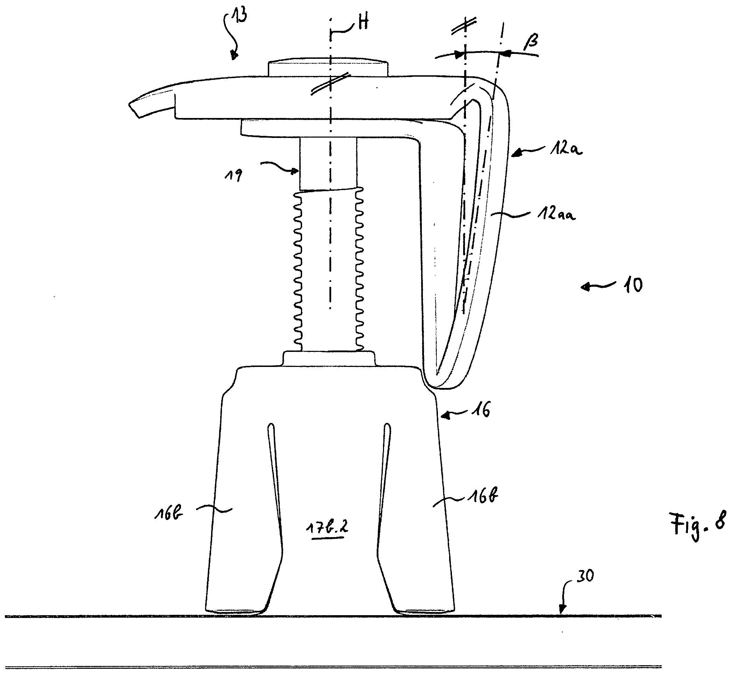

In der Fig. 8 ist die Ausrichtung der Außenwange 12aa in Bezug auf die Hochachse gezeigt, wobei ein Winkel β von etwa 8 Grad zu einer zu der Hochachse H parallelen Achse aufgetragen ist. Durch diese Ausrichtung der Außenwange 12aa in Bezug auf die Hochachse H bzw. die Schraube 19 kann eine Kraft bzw. ein Moment mit einem vorteilhaften Winkel von der Platte 13 auf den Fußabschnitt 16 übertragen werden. Der Winkel β ist bevorzugt kleiner als der im Zusammenhang mit der Fig. 3 beschriebene Winkel α. Mit anderen Worten ist die Innenwange 12ab bevorzugt in einem Winkel zu der Hochachse H geneigt, welcher entgegen gesetzt zu dem Winkel ist, in welchem die Außenwange 12aa zu der Hochachse H geneigt ist. Hierdurch kann eine stabile Abstützung der Stützwange 12a an dem Fußabschnitt 16 sowie an der Schraube 19 erfolgen, und es kann ein Kräftedreieck mit einer effektiven Ausrichtung bereitgestellt werden. Eine nach innen geneigte Anordnung der Innenwange 12ab liefert eine gute Formbeständigkeit der Stützwange 12a.

Der Einstanzflächenabschnitt 17b.2 ist doppelkonisch mit aufeinander weisenden Spitzen der Konen ausgebildet und erstreckt sich über einen großen Bereich der Anlagefläche 16b, insbesondere zumindest über 2/3 der Erstreckung der Anlagefläche 16b in Richtung der Hochachse H. Hierdurch kann ein einfach betätigbarer elastischer Biegemechanismus bereitgestellt werden, und die Biegespannungen in dem Übergangsbereich zwischen dem Einstanzflächenabschnitt 17b.2 und der Anlagefläche 16b können gering gehalten werden. Dies stellt eine häufige Wiederverwendbarkeit der Haltervorrichtung 10 sicher, also mehrmalige (De-)Montage, und gleichzeitig kann eine Vorspannung zum elastischen Andrücken des Einstanzflächenabschnitts 17b.2 an eine Profilschiene über eine lange Zeit aufrechterhalten werden.

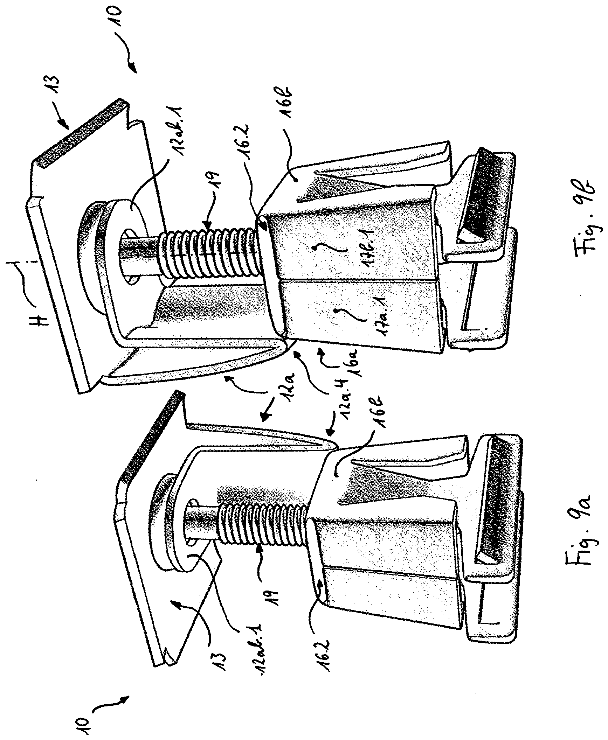

In der Fig. 9a ist die Haltervorrichtung 10 von einer Unterseite gezeigt. Gut erkennbar ist die einstückige Ausgestaltung des Kopfabschnitts 12 mit der Stützwange 12a, welche sich V-förmig von der Platte 13 erstreckt, wobei die Lasche 12ab.1 zumindest annähernd parallel zu der Platte 13 und zumindest annähernd orthogonal zu der Schraube 19 angeordnet ist. Die Stützwange 12a stützt sich mit der Wangenspitze 12a.4 in einer der Einbuchtungen 16.2 ab.

In der Fig. 9b ist die Haltervorrichtung 10 von der Unterseite in einer weiteren Winkelposition gezeigt. Der Kopfabschnitt 12 ist gegenüber dem Fußabschnitt 16 um 90 Grad um die Hochachse H verdreht. Die Stützwange 12a liegt nicht an einer der Einbuchtungen 16.2 an, sondern an einer der Anlageflächen 16a, 16b.

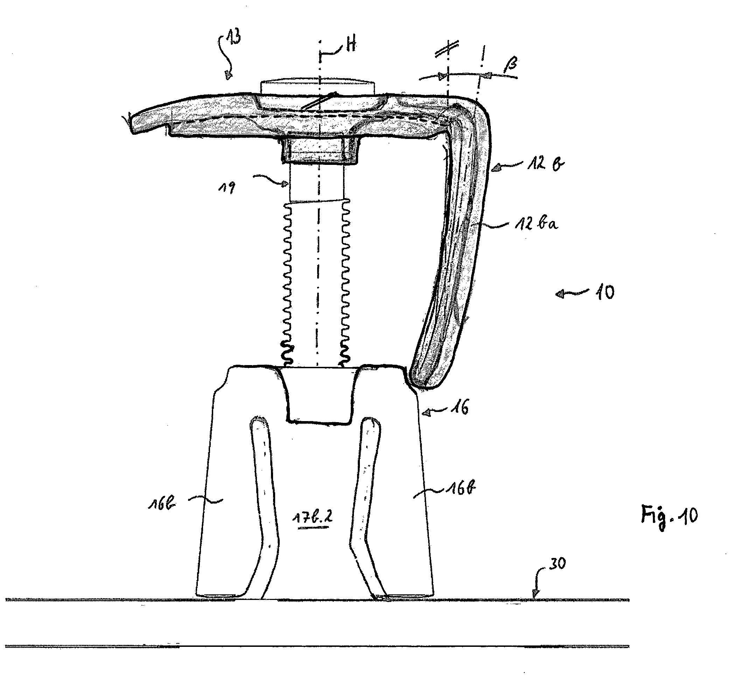

In der Fig. 10 ist ein Ausführungsbeispiel gezeigt, bei welchem der Kopfabschnitt 12 keine Stützwange mit Lasche aufweist, sondern stattdessen eine als Bügel oder Winkel ausgebildete Stützwange 12b, also eine Stützwange 12b ohne zusätzliche Innenwange. Der Kopfabschnitt 12 ist dabei als L-förmiges Winkelprofil ausgebildet, mit einer nach unten hervorstehenden Wange 12ba. Die Wange 12ba der Stützwange 12b kann dabei wie auch die in der Figur 8 beschriebene Außenwange 12aa in einem Winkel β angeordnet sein, wodurch eine gute Vorspann-Eigenschaft der Stützwange 12b sichergestellt werden kann. Die Ausführungen zur in den vorhergehenden Figuren beschriebenen Stützwange 12a können dabei auch sinngemäß auf die einwangige Stützwange 12b übertragen werden.

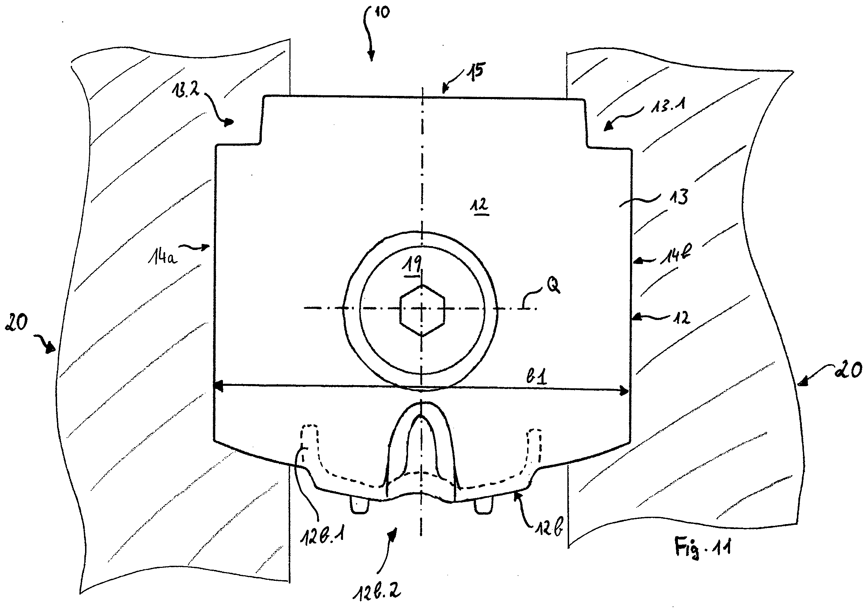

In der Fig. 11 ist ein Ausführungsbeispiel gezeigt, bei welchem die Stützwange 12b an gegenüberliegenden Seiten eine Umfaltung oder Umkantung 12b.1 aufweist. Ferner weist die Stützwange 12b und auch teilweise die Platte 13 des Kopfabschnitts 12 jeweils eine Versickung 12b.2 auf. Die Versickung 12b.2 kann eine vorteilhafte Kräfteverteilung sicherstellen und liefert auch Vorteile bei der Herstellung der entsprechenden Geometrie. Die Umkantung 12b.1 ist eingerichtet, auf einer Oberfläche eines Profils bzw. einer Profilschiene zur Anlage zu kommen und weist eine entsprechende Länge auf. Bevorzugt ist die Umkantung 12b.1 über die gesamte Länge der Stützwange 12b ausgebildet, wie im Zusammenhang mit den nachfolgenden Figuren noch beschrieben wird. Die Umkantung 12b.1 ermöglicht eine Schlittenfunktion zwecks translatorischer Verlagerung der Haltervorrichtung 10 auf einer Profilschiene.

Die Breite der Stützwange 12b ist größer als die Breite des Fußabschnitts 16, so dass die Stützwange 12b den Fußabschnitt 16 umgreifen oder umrahmen kann, wenn der Kopfabschnitt 12a auf den Fußabschnitt 16 geschraubt wird.

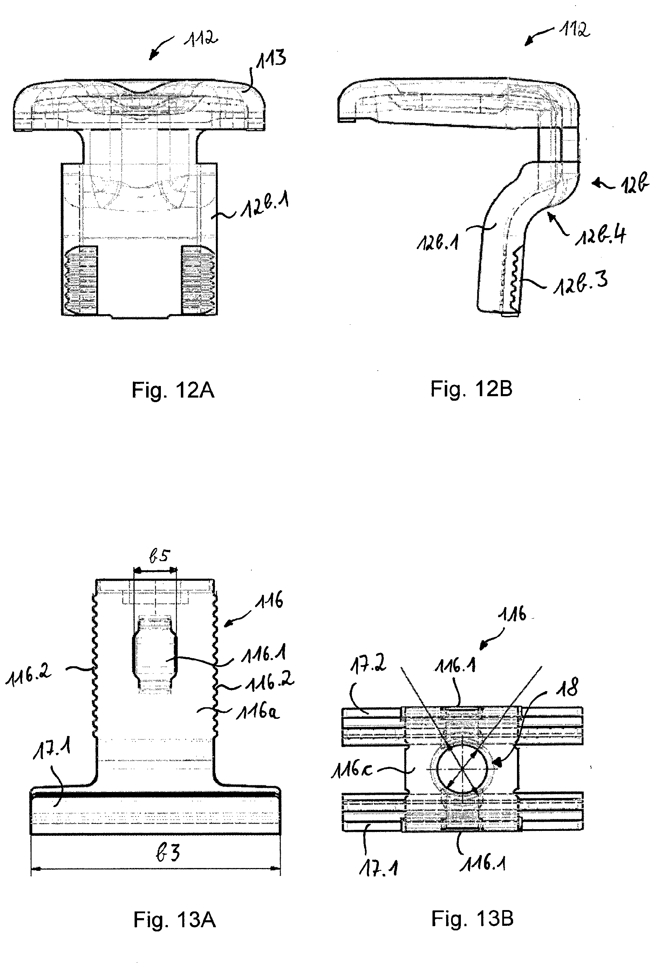

In der Figur 12A ist ein Kopfabschnitt 112 mit einer Platte 113 gezeigt, welcher dazu eingerichtet ist, auf einen Fußabschnitt geschoben bzw. geschraubt zu werden und den Fußabschnitt dabei zu sichern. In der Figur 12B ist eine Stützwange 12b gezeigt, welche eine Umkantung 12b.1 aufweist, mittels welcher die Ausrichtung des Kopfabschnitts 112 relativ zum Fußabschnitt (Figur 13A) festlegbar ist. Die Umkantung 12b.1 kann dabei eine Anlagefläche des Fußabschnitts umrahmen. Im Bereich der Umkantung 12b.1 der Stützwange 12b weist der Kopfabschnitt 112 eine Rastkontur 12b.3 (z.B. Vertiefungen oder Rillen) auf, welche formschlüssig und geometrisch korrespondierend zu einer entsprechenden Rastkontur am Fußabschnitt ausgebildet ist. Die Stützwange 12b ist durch einen Schenkel eines L-Profils gebildet, welches die Platte 113 und die Stützwange 12b bildet. Die Stützwange 12b weist einen Versatz 12b.4 nach innen auf, insbesondere eine S-förmige Kontur. Die S-förmige Kontur kann zum einen einen vorteilhaften Kraftflusspfad bereitstellen, zum anderen kann die Stützwange 12b bei dieser Form an einem deutlich schmaleren Fußabschnitt zur Anlage gebracht werden.

In der Figur 13A ist der korrespondierend ausgebildete Fußabschnitt 116 gezeigt. Der Fußabschnitt 116 weist zwei gegenüberliegende Anlageflächen 116a auf, an welchen jeweils ein Führungsabschnitt 116.1 zum Führen eines Verbindungselements, insbesondere einer Schraube, ausgebildet ist. Der Führungsabschnitt 116.1 kann als ein nach innen gebogener oder gestanzter Teil der entsprechenden Anlagefläche 116a ausgebildet sein. Der Führungsabschnitt 116.1 weist eine Breite b5 auf, welche etwa einem Drittel der Breite der Anlagefläche 116a entspricht. An einem jeweiligen seitlichen Rand der Anlageflächen 116a sind Rastkonturen 116.2 ausgebildet, welche geometrisch korrespondierend zu den Rastkonturen 12b.3 des Kopfabschnitts 112 ausgebildet sind. An diesen Rastkonturen kann der Kopfabschnitt 112 relativ zum Fußabschnitt 116 in vordefinierbaren Relativpositionen positioniert werden. Der Fußabschnitt 116 weist ferner zwei gegenüberliegend zueinander angeordnete Eingriffsabschnitte 17.1, 17.2 auf.

In der Figur 13B ist eine Zentralplatte 116c des Fußabschnitts 116 gezeigt, in welcher eine Gewindebohrung 18 vorgesehen ist, wie durch den jeweils nicht bemaßten Innen- und Außendurchmesser des Gewindes angedeutet ist. Die Gewindebohrung 18 ist geometrisch korrespondierend zu einem Gewinde eines Verbindungselements, insbesondere einer Schraube, ausgebildet. Der Fußabschnitt 116 ist im Querschnitt U-förmig.

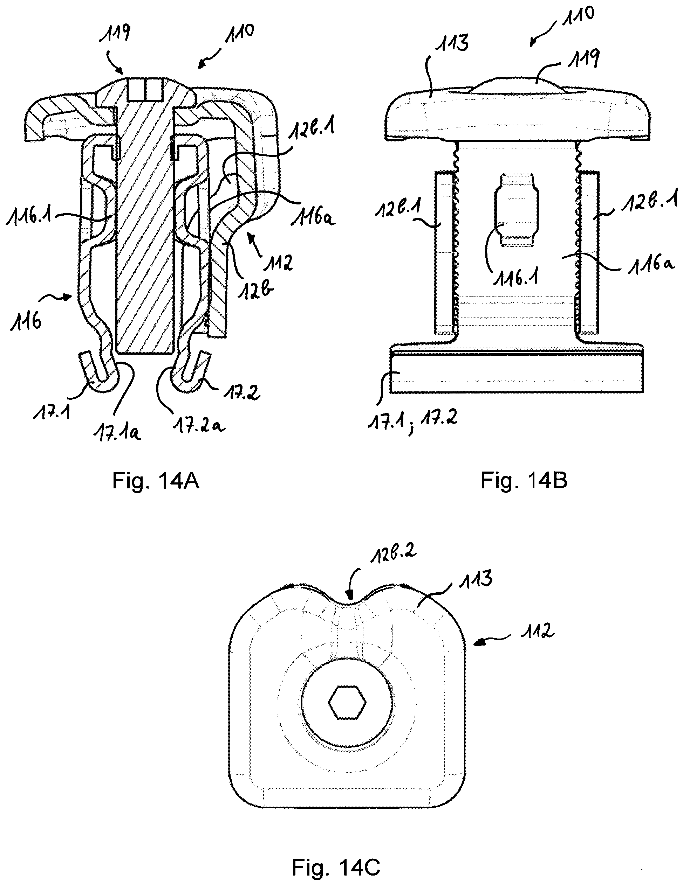

In den Figuren 14A und 14B ist eine Haltervorrichtung 110 umfassend den zuvor beschriebenen Kopfabschnitt 112 und Fußabschnitt 116 gezeigt. Der Kopfabschnitt 112 ist mittels einer Schraube 119 relativ zum Fußabschnitt 116 positioniert, wobei die Schraube 119 durch die beiden Führungsabschnitte 116.1 geführt ist. Die Führungsabschnitte 116.1 können eine mit dem Gewinde der Schraube 119 korrespondierende Kontur oder Struktur aufweisen. Die Eingriffsabschnitte 17.1, 17.2 weisen jeweils einen Anlageabschnitt 17.1a, 17.2a auf, an welchem ein unteres freies Ende der Schraube 119 derart zur Anlage kommen kann, dass die Eingriffsabschnitte 17.1, 17.2 nicht nach innen verlagert werden können. Hierdurch kann eine Eigensicherung der Haltervorrichtung 110 erfolgen. Aus der Figur 14B geht hervor, auf welche Weise die Umkantungen 12b.1 die entsprechende Anlagefläche 116a derart umgreifen können, dass die Winkelposition des Kopfabschnitts 112 relativ zum Fußabschnitt 116 vordefiniert und unveränderlich ist.

In den Figuren 14A, 14B ist eine Anordnung der Haltervorrichtung 110 gezeigt, in welcher die Umkantungen 12b.1 nur eine der Anlageflächen 116a umgreifen. Der Kopfabschnitt 112 kann alternativ auch derart relativ zum Fußabschnitt 116 ausgerichtet sein, dass die Umkantungen 12b.1 beide Anlageflächen 116a umgreifen, wobei die Umkantungen 12b.1 und die Stützwange 12b dann nicht eine der Anlageflächen 116a bedecken, sondern die beiden Anlageflächen 116a seitlich begrenzen. Bei dieser Anordnung können die Umkantungen 12b.1 durch Kontakt mit den beiden Anlageflächen 116a gleichermaßen sicherstellen, dass die Winkelposition des Kopfabschnitts 112 relativ zum Fußabschnitt 116 vordefiniert und unveränderlich ist. Bei dieser Anordnung ist der Kopfabschnitt 112 relativ zum Fußabschnitt 116 in Bezug auf die in den Figuren 14A, 14B gezeigte Anordnung um 90° in die eine oder andere Richtung verdreht. Bevorzugt entspricht die Breite der jeweiligen Anlagefläche 116a dabei einem Abstand der Anlageflächen 116a zueinander. Hierdurch kann eine exakte Ausrichtung des Kopfabschnitts 112 relativ zum Fußabschnitt 116 in allen relativen Winkelpositionen sichergestellt werden.

In der Figur 14C ist eine Versickung 12b.2 des Kopfabschnitts 112 gezeigt. Die Versickung 12b.2 entspricht dabei bevorzugt einem konkav nach innen gewölbten Abschnitt der Stützwange 12b und erstreckt sich dabei auch auf die Platte 113. Die Versickung 12b.2 kann zum einen eine hohe Formbeständigkeit der Stützwange 12b sicherstellen, zum anderen kann ein Umformen des Kopfabschnitts 112 zum Ausbilden der Stützwange 12b erleichtert werden.

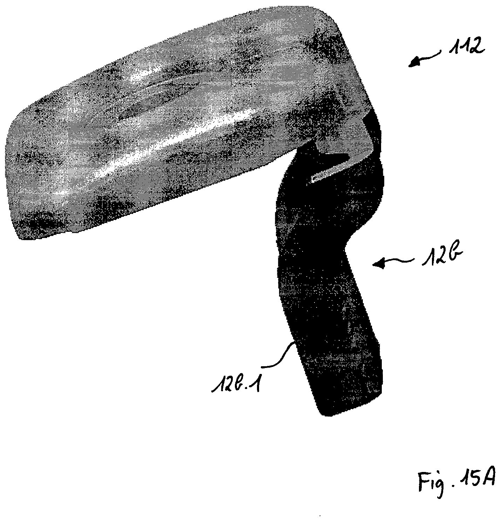

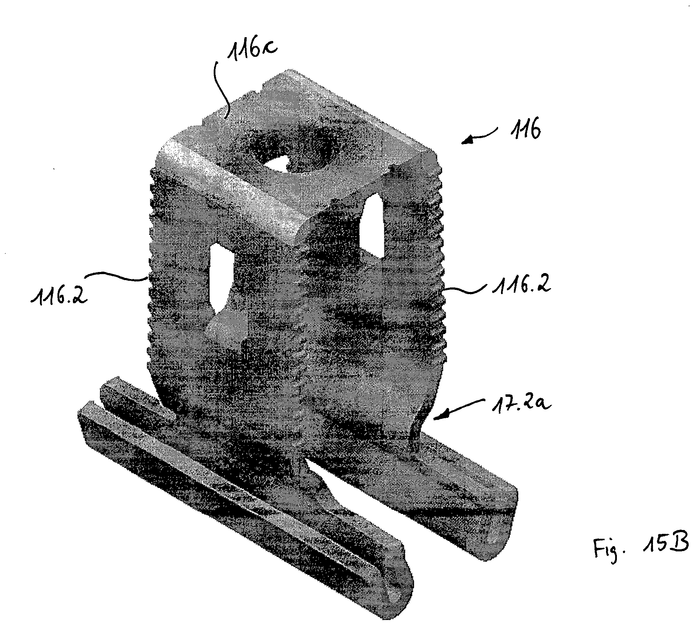

In den Figuren 15A und 15B sind der Kopfabschnitt 112 und der Fußabschnitt 116 jeweils in einer perspektivischen Seitenansicht gezeigt, aus welcher hervorgeht, dass die gesamte Haltervorrichtung einen einfachen, robusten Aufbau aufweist. Zusammen mit einem/dem Verbindungselement ist die Haltervorrichtung nur dreiteilig.

### Bezugszeichenliste

- 1: System, insbesondere Solarmodulsystem
- 10; 110: Haltervorrichtung
- 12; 112: Kopfabschnitt
- 12a: Stützwange
- 12b: als Winkel ausgebildete Stützwange
- 12b.1: Umfaltung, Umkantung
- 12b.2: Versickung
- 12b.3: Rastkontur (z.B. Rille oder Vertiefungen)
- 12b.4: Versatz nach innen
- 12a.4: Wangenspitze
- 12aa: Außenwange
- 12ba: Wange
- 12ab: Innenwange
- 12ab.1: Lasche an Innenwange
- 12ab.2: Öffnung in Lasche
- 13; 113: Platte
- 13a: Wölbung
- 13.1: Aussparung, insbesondere Ausstanzung
- 13.2: Aussparung, insbesondere Ausstanzung
- 13b: Öffnung in Platte
- 14a: Anlageabschnitt, insbesondere Anlagekante
- 14b: Anlageabschnitt, insbesondere Anlagekante
- 15: Anlageabschnitt, insbesondere Anlagekante
- 16; 116: Fußabschnitt
- 16.1: Einbuchtung
- 16.2: Einbuchtung
- 116.1: Führungsabschnitt
- 116.2: Rastkontur (z.B. Rille oder Vertiefungen)
- 16a; 116a: Anlagefläche
- 16b: Anlagefläche
- 16c; 116c: Zentralplatte
- 17a: Bein
- 17b: Bein
- 17a.1: Führungsfläche bzw. Steg am Bein
- 17b.1: Führungsfläche bzw. Steg am Bein
- 1 7a.2: Einstanzflächenabschnitt am Bein
- 17b.2: Einstanzflächenabschnitt am Bein
- 17.1: Eingriffsabschnitt
- 17.1a: Anlageabschnitt
- 17.2: Eingriffsabschnitt
- 17.2a: Anlageabschnitt
- 17.11: Haken am Eingriffsabschnitt
- 17.12: Haken am Eingriffsabschnitt
- 18: Gewindebohrung
- 19; 119: Verbindungselement
- 20: Flächenmodul
- 30: Träger, insbesondere Profilschiene
- 31: Modulseite
- 32: Profil, insbesondere Innenprofil bzw. hervorstehender Randabschnitt
- 33a: Lateralfläche
- 33b: Lateralfläche
- 34: Unterseite

- b1: maximale Breite des Kopfabschnitts bzw. Breite einer Platte davon
- b2: Breite der Stützwange
- b3: Breite des Eingriffsabschnitts
- b4: Breite der Zentralplatte
- b5: Breite des Führungsabschnitts

- F1: Krafteinwirkung auf Kopfabschnitt bei Klemmung mit einem Flächenmodul
- F2: Krafteinwirkung auf Kopfabschnitt bei Klemmung mit zwei Flächenmodulen
- H: Hochachse
- M: Biegemoment um die Querachse
- Q: Querachse

- α: Winkel zwischen den Wangen 12aa, 12ab
- β: Winkel zwischen der Hochachse und der Außenwange

## Patentansprüche

1. Haltervorrichtung (10; 110) zum Befestigen, insbesondere zum Festklemmen, eines Flächenmoduls (20), insbesondere eines gerahmten Solarpaneels, an wenigstens einem Träger (30), insbesondere einer Profilschiene, mit:
- einem Kopfabschnitt (12; 112) der zum Zusammenwirken mit dem Flächenmodul (20) eingerichtet ist;
- einem Fußabschnitt (16; 116) der zum Zusammenwirken mit dem Träger (30) eingerichtet ist;
- einem Verbindungselement (19; 119) das zum Verbinden des Kopfabschnitts (12; 112) mit dem Fußabschnitt (16; 116)eingerichtet ist, wobei der Kopfabschnitt (12; 112) relativ zum Fußabschnitt (16; 116) entlang einer Hochachse (H) der Haltervorrichtung (10; 110) mittels des Verbindungselements (19) verlagerbar ist;
wobei der Kopfabschnitt (12; 112) relativ zum Fußabschnitt (16; 116) in wenigstens zwei um die Hochachse (H) zueinander verdrehten Winkelpositionen mit jeweils einem vorbestimmten Verdrehwinkel derart lagerbar ist, dass der Kopfabschnitt in wenigstens zwei der Winkelpositionen jeweils an wenigstens einem oder wenigsten zwei Flächenmodulen lagerbar ist, insbesondere mit einem oder mehreren Anlageabschnitten (14a, 14b, 15), die entsprechend den jeweiligen Winkelpositionen angeordnet sind, der Verdrehwinkel zwischen wenigstens zwei der wenigstens zwei zueinander verdrehten Winkelpositionen im Bereich von 90 Grad liegt, bevorzugt 90 Grad beträgt,
der Kopfabschnitt (12; 112) eine Stützwange (12a; 12b) aufweist, welche sich im Wesentlichen in Richtung der Hochachse (H) erstreckt und wobei die Stützwange (12a; 12b) eine Breite (b2) aufweist, welche kleiner ist als eine Breite (b1) des Kopfabschnitts (12; 112) in entsprechender Richtung.

2. Haltervorrichtung (10; 110) nach Anspruch 1, **dadurch gekennzeichnet, dass** der Kopfabschnitt (12; 112) relativ zum Fußabschnitt (16; 116) in wenigstens drei um die Hochachse (H) zueinander verdrehten Winkelpositionen mit jeweils einem vorbestimmten Verdrehwinkel lagerbar ist.

3. Haltervorrichtung (10; 110) nach Anspruch 1 oder 2, **dadurch gekennzeichnet, dass** die Haltervorrichtung (10; 110)eingerichtet ist, in einer jeweiligen Winkelposition wahlweise ein Flächenmodul (20) oder zwei Flächenmodule (20) am Träger (30) zu befestigen.

4. Haltervorrichtung (10; 110) nach Anspruch 1, **dadurch gekennzeichnet, dass** die Stützwange (12a; 12b) eine Breite (b2) aufweist, welche maximal 2/3 der Breite des Kopfabschnitts (12; 112) beträgt, bevorzugt etwa die Hälfte der Breite des Kopfabschnitts (12; 112) beträgt, wobei die Breite der Stützwange bevorzugt größer oder gleich einer Breite des Fußabschnitts in einem Bereich ist, in welchem die Stützwange am Fußabschnitt zur Anlage kommt.

5. Haltervorrichtung (10; 110) nach Anspruch 1 oder 4, **dadurch gekennzeichnet, dass** die Stützwange (12a; 12b) einstückig mit einer Platte (13; 113) des Kopfabschnitts (12; 112) ausgebildet ist, wobei sich die Platte (13; 113) im Wesentlichen orthogonal zur Hochachse (H) der Haltervorrichtung (10; 110) erstreckt.

6. Haltervorrichtung (110) nach einem der Ansprüche 1 oder 4 bis 5, **dadurch gekennzeichnet, dass** die Stützwange (12b) zusammen mit einer/der Platte (113) des Kopfabschnitts (112) ein L-förmiges Profil bildet.

7. Haltervorrichtung (10; 110) nach einem der vorhergehenden Ansprüche, **dadurch gekennzeichnet, dass** der Kopfabschnitt (12; 112) einen dreiseitigen Anlageabschnitt oder drei Anlageabschnitte (14a, 14b, 15), insbesondere Anlagekanten, aufweist, welche jeweils eingerichtet sind, am Flächenmodul (20), insbesondere an einem Rahmenabschnitt des jeweiligen Flächenmoduls (20), in der jeweiligen Winkelposition zur Anlage zu kommen.

8. Haltervorrichtung (10; 110) nach Anspruch 7, **dadurch gekennzeichnet, dass** der Anlageabschnitt oder die Anlageabschnitte (14a, 14b, 15) durch eine Platte (13; 113) des Kopfabschnitts (12; 112) gebildet ist/sind, wobei die Platte (13; 113) im Bereich der Anlageabschnitte (14a, 14b, 15) vorzugsweise jeweils eine Wölbung (13a) aufweist, welche zum Fußabschnitt (16; 116) weist.

9. Haltervorrichtung (10; 110) nach einem der vorhergehenden Ansprüche, **dadurch gekennzeichnet, dass** der Kopfabschnitt (12; 112) und/oder der Fußabschnitt (16; 116) als Biegeteil, bevorzugt Stanz-Biegeteil, ausgebildet ist bzw. sind.

10. Haltervorrichtung (10) nach einem der vorhergehenden Ansprüche, **dadurch gekennzeichnet, dass** der Fußabschnitt (16; 116) zwei Beine (17a, 17b) aufweist, welche zumindest abschnittsweise relativ zueinander elastisch bewegbar sind, insbesondere in radialer Richtung senkrecht zur Hochachse (H), und insbesondere auch relativ zu benachbarten Flächenabschnitten des Fußabschnitts.

11. Haltervorrichtung (10; 110) nach einem der vorhergehenden Ansprüche, **dadurch gekennzeichnet, dass** der Fußabschnitt (16; 116) eine Führungsfläche (17a.1, 17b.1) und/oder eine Anlagefläche (16a, 16b; 116a) jeweils zum Abstützen der Stützwange (12a) aufweist, an welcher die Stützwange (12a) im vorbestimmten Verdrehwinkel relativ zum Fußabschnitt (16; 116) lagerbar und/oder verlagerbar ist.

12. Haltervorrichtung (110) nach einem der vorhergehenden Ansprüche, **dadurch gekennzeichnet, dass** der Fußabschnitt (116) im Querschnitt U-förmig ist und zwei gegenüberliegende Anlageflächen (116a) aufweist, an welchen eine/die Stützwange (12b) zur Anlage kommt und mittels Umkantungen (12b.1) relativ zum Fußabschnitt (116) positionierbar ist.

13. Haltervorrichtung (110) nach einem der vorhergehenden Ansprüche, **dadurch gekennzeichnet, dass** der Fußabschnitt (116) einen Führungsabschnitt (116.1) aufweist, welcher an einer/der Anlagefläche (116a) angeordnet ist und eingerichtet ist, das Verbindungselement (119) zum Positionieren des Kopfabschnitts (112) relativ zum Fußabschnitt (116) zu führen.

14. Haltervorrichtung (110) nach einem der vorhergehenden Ansprüche, **dadurch gekennzeichnet, dass** das Verbindungselement (119) derart im Fußabschnitt (116) geführt ist, dass die Haltervorrichtung (110) selbstsichernd ist.

15. System (1) mit wenigstens einem Flächenmodul (20), insbesondere einem gerahmten Solarpaneel, wenigstens einem Träger (30), insbesondere einer Profilschiene, und wenigstens einer Haltervorrichtung (10; 110) nach einem der vorhergehenden Ansprüche.

16. System (1) nach Anspruch 15, **dadurch gekennzeichnet, dass** die Haltervorrichtung (10; 110) mit dem wenigstens einen Flächenmodul (20) und dem Träger (30) verbunden ist, indem der Fußabschnitt (16; 116) der Haltervorrichtung (10; 110) formschlüssig in den Träger (30) eingreift, und dabei vorzugsweise auf Zug beansprucht wird, und der Kopfabschnitt (12; 112) auf dem wenigstens einen Flächenmodul (20), vorzugsweise mit mindestens zwei Anlageabschnitten (14a, 14b, 15), zur Anlage kommt, und dabei vorzugsweise im Wesentlichen auf Biegung beansprucht wird.

## Claims

1. Holding device (10; 110) for attaching - especially, for clamping - a surface module (20) - especially, a framed solar panel - on at least one support (30) - especially, a profile rail - with:
- a head section (12; 112) configured for interacting with the surface module (20);
- a foot section (16; 116) configured for interacting with the support (30);
- a connecting element (19; 119) that is configured for connecting the head section (12; 112) to the foot section (16; 116), wherein the head section (12; 112) is shiftable, relative to the foot section (16; 116), along a vertical axis (H) of the holding device (10; 110) by means of the connecting element (19);
wherein the head section (12; 112), relative to the foot section (16; 116), in at least two angle positions that are twisted relative to each other around the vertical axis (H) at a respective predetermined twisting angle, may be mounted in such a way that the head section may be mounted in at least two of the angle positions respectively on at least one or at least two surface modules - especially, with one or more contact sections (14a, 14b, 15) that are arranged according to the respective angle positions - the twisting angle between at least two of the at least two angle positions twisted relative to each other lies within the range of 90 degrees - preferably, 90 degrees -
the head section (12; 112) has a support cheek (12a; 12b) which substantially extends in the direction of the vertical axis (H), and wherein the support cheek (12a; 12b) has a width (b2) that is smaller than a width (b1) of the head section (12; 112) in the respective direction.

2. Holding device (10; 110) according to claim 1, **characterized in that** the head section (12; 112) may be mounted, relative to the foot section (16; 116), in at least three angle positions that are twisted relative to each other around the vertical axis (H) at a respective predetermined twisting angle.

3. Holding device (10; 110) according to claim 1 or 2, **characterized in that** the holding device (10; 110) is configured for attaching either one surface module (20) or two surface modules (20) on the support (30) in a respective angle position.

4. Holding device (10; 110) according to claim 1, **characterized in that** the support cheek (12a; 12b) has a width (b2) that is at most 2/3 of the width of the head section (12; 112) - preferably, about half of the width of the head section (12; 112) - wherein the width of the support cheek is preferably greater than or equal to a width of the foot section in an area where the support cheek comes to rest against the foot section.

5. Holding device (10; 110) according to claim 1 or 4, **characterized in that** the support cheek (12a; 12b) is formed in one piece together with a plate (13; 113) of the head section (12; 112), wherein the plate (13; 113) substantially extends orthogonally to the vertical axis (H) of the holding device (10; 110).

6. Holding device (110) according to one of claims 1 or 4 through 5, **characterized in that** the support cheek (12b) forms an L-shaped profile together with a/the plate (113) of the head section (112).

7. Holding device (10; 110) according to one of the previous claims, **characterized in that** the head section (12; 112) has a three-sided contact section or three contact sections (14a, 14b, 15) - especially, contact edges - that are each configured for coming to rest against a surface module (20) - especially, against a frame section of the respective surface module (20) - at the respective angle position.

8. Holding device (10; 110) according to claim 7, **characterized in that** the contact section or the contact sections (14a, 14b, 15) is/are formed by a plate (13; 113) of the head section (12; 112), wherein the plate (13; 113) in the area of the contact sections (14a, 14b, 15) preferably respectively has a curvature (13a) that points to the foot section (16; 116).

9. Holding device (10; 110) according to one of the previous claims, **characterized in that** the head section (12; 112) and/or the foot section (16; 116) is/are formed as a bent part - preferably, a stamped and bent part.

10. Holding device (10) according to one of the previous claims, **characterized in that** the foot section (16; 116) has two limbs (17a, 17b) that are, at least sectionally, elastically movable relative to each other - especially, in a radial direction perpendicular to the vertical axis (H), and, especially, also relative to the neighboring surface sections of the foot section.

11. Holding device (10; 110) according to one of the previous claims, **characterized in that** the foot section (16; 116) has a guide surface (17a.1, 17b.1) and/or a contact surface (16a, 16b; 116a) respectively for supporting the support cheek (12a), on which surface the support cheek (12a) can be positioned and/or shifted at a predetermined twisting angle relative to the foot section (16, 116).

12. Holding device (110) according to one of the previous claims, **characterized in that** the foot section (116) is U-shaped in cross-section and has two contact surfaces (116a) positioned opposite each other, against which a/the support cheek (12b) comes to rest and on which, by means of surrounding edges (12b.1), it can be positioned relative to the foot section (116).

13. Holding device (110) according to one of the previous claims, **characterized in that** the foot section (116) has a guide section (116.1) which is arranged on a/the contact surface (116a) and is configured for guiding the connecting element (119) so as to position the head section (112) relative to the foot section (116).

14. Holding device (110) according to one of the previous claims, **characterized in that** the connecting element (119) is guided in the foot section (116) in such a way that the holding device (110) is self-securing.

15. System (1) with at least one surface module (20) - especially, a framed solar panel - at least one support (30) - especially, a profile rail - and at least one holding device (10; 110) according to one of the previous claims.

16. System (1) according to claim 15, **characterized in that** the holding device (10; 110) is connected to the at least one surface module (20) and the support (30) by the foot section (16; 116) of the holding device (10; 110) being positively engaged in the support (30) and thereby preferably subject to traction, and the head section (12; 112) coming to rest against the at least one surface module (20) - preferably, with at least two contact sections (14a, 14b, 15) - and being, preferably, substantially subject to bending stress in the process.

## Revendications

1. Dispositif de retenue (10 ; 110) destiné à fixer, en particulier à bloquer, un module plat (20), en particulier un panneau solaire enchâssé, sur au moins un support (30), en particulier une barre profilée, comprenant :
- une section de tête (12 ; 112) qui est agencée pour collaborer avec le module plat (20) ;
- une section de pied (16 ; 116) qui est agencée pour collaborer avec le support (30) ;
- un élément de liaison (19 ; 119) qui est agencé pour relier la section de tête (12 ; 112) à la section de pied (16 ; 116), dans lequel la section de tête (12 ; 112) peut être déplacé par rapport à la section de pied (16 ; 116) le long d'un axe vertical (H) du dispositif de retenue (10 ; 110) au moyen de l'élément de liaison (19) ;
dans lequel la section de tête (12 ; 112) peut être placée par rapport à la section de pied (16 ; 116) dans au moins deux positions angulaires, tournées l'une par rapport à l'autre autour de l'axe vertical (H), présentant respectivement un angle de torsion prédéterminé, de telle manière que la section de tête peut être placée dans au moins deux des positions angulaires respectivement au niveau d'au moins un ou au moins deux module(s) plat(s), en particulier comprenant une ou plusieurs section(s) de mise en place (14a, 14b, 15) qui sont agencées conformément aux positions angulaires respectives, l'angle de torsion entre au moins deux parmi les au moins deux positions angulaires tournées l'une par rapport à l'autre, se situant aux alentours de 90° et étant de manière préférée de 90°,
la section de tête (12 ; 112) présente une barre de soutien (12a ; 12b) qui s'étend essentiellement dans la direction de l'axe vertical (H) et dans lequel la barre de soutien (12a ; 12b) présente une largeur (b2) qui est inférieure à une largeur (b1) de la section de tête (12 ; 112) dans la direction correspondante.

2. Dispositif de retenue (10 ; 110) selon la revendication 1, **caractérisé en ce que** la section de tête (12 ; 112) peut être placée, par rapport à la section de pied (16 ; 116), dans au moins trois positions angulaires, tournées l'une par rapport à l'autre autour de l'axe vertical (H), présentant respectivement un angle de rotation prédéterminé.

3. Dispositif de retenue (10 ; 110) selon la revendication 1 ou 2, **caractérisé en ce que** le dispositif de retenue (10 ; 110) est agencé pour fixer au choix un module plat (20) ou deux modules plats (20) sur le support (30) dans une position angulaire respective.

4. Dispositif de retenue (10 ; 110) selon la revendication 1, **caractérisé en ce que** la barre de soutien (12a ; 12b) présente une largeur (b2) qui représente au plus 2/3 de la largeur de la section de tête (12 ; 112), de manière préférée représente environ la moitié de la largeur de la section de tête (12 ; 112), dans lequel la largeur de la barre de soutien est de manière préférée supérieure ou égale à une largeur de la section de pied dans un secteur dans lequel la barre de soutien vient se mettre en place au niveau de la section de pied.

5. Dispositif de retenue (10 ; 110) selon la revendication 1 ou 4, **caractérisé en ce que** la barre de soutien (12a ; 12b) est réalisée d'un seul tenant avec une plaque (13 ; 113) de la section de tête (12 ; 112), ladite plaque (13; 113) s'étendant de manière essentiellement orthogonale par rapport à l'axe vertical (H) du dispositif de retenue (10 ; 110).

6. Dispositif de retenue (110) selon l'une quelconque des revendications 1 ou 4 à 5, **caractérisé en ce que** la barre de soutien (12b) forme, en commun avec une/la plaque (113) de la section de tête (112), un profilé en forme de L.

7. Dispositif de retenue (10 ; 110) selon l'une quelconque des revendications précédentes, **caractérisé en ce que** la section de tête (12 ; 112) présente une section de mise en place à trois côtés ou trois sections de mise en place (14a, 14b, 15), en particulier des bords de mise en place, qui sont respectivement agencés pour venir se mettre en place dans la position angulaire respective au niveau d'un module plat (20), en particulier au niveau d'une section de châssis du module plat (20) respectif.

8. Dispositif de retenue (10 ; 110) selon la revendication 7, **caractérisé en ce que** la section de mise en place ou les sections de mise en place (14a, 14b, 15) est/sont formée(s) d'une plaque (13 ; 113) de la section de tête (12 ; 112), ladite plaque (13 ; 113) présentant, dans le secteur des sections de mise en place (14a, 14b, 15), de manière préférée respectivement une convexité (13a) qui regarde vers la section de pied (16 ; 116).

9. Dispositif de retenue (10 ; 110) selon l'une quelconque des revendications précédentes, **caractérisé en ce que** la section de tête (12 ; 112) et/ou la section de pied (16 ; 116) est resp. sont réalisée(s) sous forme de pièce cintrée, de manière préférée de pièce cintrée emboutie.

10. Dispositif de retenue (10 ; 110) selon l'une quelconque des revendications précédentes, **caractérisé en ce que** la section de pied (16 ; 116) présente deux jambes (17a, 17b) qui sont mobiles de manière élastique l'une par rapport à l'autre au moins par section, en particulier dans la direction radiale perpendiculairement à l'axe vertical (H), et en particulier également par rapport à des sections plates voisines de la section de pied.

11. Dispositif de retenue (10 ; 110) selon l'une quelconque des revendications précédentes, **caractérisé en ce que** la section de pied (16 ; 116) présente une surface de guidage (17a.1, 17b.1) et/ou une surface de mise en place (16a, 16b, 116a) destinées respectivement à l'étaiement de la barre de soutien, la barre de soutien (12a) pouvant être placée et/ou déplacée au niveau desdites surfaces selon un angle de torsion prédéterminé par rapport à la section de pied (16 ; 116).

12. Dispositif de retenue (10 ; 110) selon l'une quelconque des revendications précédentes, **caractérisé en ce que** la section de pied (116) présente une section en forme de U et deux surfaces de mise en place (116a) se faisant face, une/la barre de soutien (12b) venant en place au niveau desdites surfaces et pouvant être positionnée par rapport à la section de pied (116) grâce à des rebords (12b.1).

13. Dispositif de retenue (110) selon l'une quelconque des revendications précédentes, **caractérisé en ce que** la section de pied (116) présente une section de guidage (116.1) qui est agencée au niveau d'une/la surface de mise en place (116a) de manière à guider l'élément de liaison (119) par rapport à la section de pied (116) en vue du positionnement de la section de tête (112).

14. Dispositif de retenue (110) selon l'une quelconque des revendications précédentes, **caractérisé en ce que** l'élément de liaison (119) est guidé dans la section de pied (116) de telle manière que le dispositif de retenue (110) est autobloquant.

15. Système (1) comprenant au moins un module plat (20), en particulier un panneau solaire enchâssé, au moins un support (30), en particulier une barre profilée, et au moins un dispositif de retenue (10 ; 110) selon l'une quelconque des revendications précédentes.

16. Système (1) selon la revendication 15, **caractérisé en ce que** le dispositif de retenue (10 ; 110) est relié avec le au moins un module plat (20) et le support (30) du fait que la section de pied (16 ; 116) du dispositif de retenue (10 ; 110) vient en prise par complémentarité de forme dans le support (30), et de manière préférée est ainsi mis en tension, et la section de tête (12 ; 112) vient en place sur le au moins un module plat (20), de manière préférée avec au moins deux sections de mise en place (14a, 14b, 15), et de manière préférée est ainsi essentiellement mise en flexion.
